# EUROPEAN PATENT APPLICATION

(11) **EP 4 813 941 A1**
(43) Date of publication of application: **30.09.2026**
(21) Application number: 26176237.1
(22) Date of filing: 05.12.2022
(51) Int. Cl.: C03C 17/00, C09D 5/24, H05B 3/14, H05B 3/84

(54) **CONDUCTIVE INK**

(30) Priority: 09.12.2021 US 202163287672 P
(62) Document number(s) of the earlier application(s) in accordance with Art. 76 EPC: 22843555.8 / 4 444 666
(71) Applicant: Corning Incorporated, Corning, New York 14831 (US)
(72) Inventor: BERREBI, Mickaël, 75012 Paris (FR); HENRY, David, 77590 Fontaine le Port (FR); LEHUEDE, Philippe, 77210 Dammarie-les-Lys (FR)
(74) Representative: Epping - Hermann - Fischer

(57) **Abstract**

Articles comprise a substrate and a conductive film disposed on a surface of the substrate. The conductive film comprises a volume resistivity in a range from about 0.01 Ohm-centimeters to about 10⁻⁵ Ohm-centimeters. The conductive film comprises a pencil hardness of about 8H or more. The conductive film comprises a scratch resistance of about 3 Newtons or more. Methods of forming articles comprise disposing a conductive ink on a surface of the substrate. Methods comprise heating the conductive ink at a first temperature from about 100°C to about 250°C for a first period of time to form a conductive film. The conductive ink comprises a conductive filler, a reactive, silane-containing binder, and a solvent.

## Description

### PRIORITY

This application claims the benefit of priority under 35 U.S.C. §119 of U.S. Provisional Application Serial No. 63/287,672, filed on December 9, 2021, the content of which is relied upon and incorporated herein by reference in its entirety.

### FIELD

The present disclosure relates generally to articles, conductive ink, and methods of making articles and, more particularly, to coated articles comprising a conductive film and methods of using conductive ink to form the conductive film.

### BACKGROUND

Certain applications may render it desirable to provide conductive coatings on glass-based substrates. For example, it may be desirable to incorporate conductive coatings on glass plies of a laminate for selectively heating portions of the laminate. Certain existing conductive films may suffer from various drawbacks, such as low adhesion and/or poor chemical resistance. Existing conductive films may also exhibit poor durability, low adhesion, low pencil hardness, low scratch resistance, poor chemical resistance, and/or high electrical resistance (e.g., volume resistivity). These issues can limit the usefulness and/or lifetime of conductive films. Consequently, there is a need to develop conductive coatings that can be used in articles that are durable and can provide a level of electrical resistance.

### SUMMARY

There are set forth herein articles comprising a conductive film with a volume resistivity in a range from about 0.01 Ohm-centimeters to about 10⁻⁵ Ohm-centimeters, a pencil hardness of about 8H or more, and a scratch resistance of about 3 Newtons or more. The articles can comprise a substrate comprising a glass-based material and/or a ceramic-based material, which can provide good dimensional stability, good impact resistance, and/or good puncture resistance. The substrate comprising a glass-based material and/or a ceramic-based material can comprise one or more compressive stress regions, which can further provide increased impact resistance and/or increased puncture resistance.

The conductive film can comprise a conductive filler and a silane-containing binder. Providing the conductive filler in the conductive ink can enable the conductive film formed from the conductive ink to be electrically conductive. Providing at least 50 wt% of the conductive filler can enable conductivity, for example, enabling the filler to form paths through the resulting conductive ink. Providing less than 93 wt% of the conductive filler can enable good adhesion, scratch resistance, chemical resistance, and/or pencil hardness of the resulting conductive film. Providing the silane-containing binder can bond to the substrate, which can increase adhesion, scratch resistance, and/or chemical resistance of the conductive film. Moreover, providing a high concentration of silane (e.g., about 0.3 mol silane per kg conductive film) can further increase adhesion, scratch resistance, and/or chemical resistance of the conductive film. Providing the silane-containing binder containing nitrogen (e.g., amine, urea, allophanate) and/or sulfur (e.g., thiol) can further improve adhesion of the conductive film. A conductivity of the conductive film can be adjusted by changing a ratio of the conductive filler to the silane-containing binder.

Aspects of the disclosure comprise conductive inks, which can be used to make conductive films. The conductive inks can comprise the conductive filler, a reactive, silane-containing binder, and a solvent. Providing about 4 wt% or more of the reactive, silane-containing binder can provide good adhesion, scratch resistance, chemical resistance, and/or pencil hardness to the resulting conductive film. Providing less than 30 wt% of the reactive, silane-containing binder can enable the resulting conductive film to be conductive, for example, by allowing the conductive filler to form paths through the conductive ink. Providing a concentration of 0.3 mol/kg or more of silane in the conductive ink can increase an adhesion of the resulting conductive film, increase a chemical resistance of the resulting conductive film, and/or increasing a hardness of the resulting conductive film. Providing the reactive, silane-containing binder comprising nitrogen (e.g., amine, urea, allophanate) and/or sulfur (e.g.,) can improve stability (e.g., shelf stability) of the conductive ink and/or improve adhesion of the resulting conductive film. Providing a solvent of about 3 wt% or more can be used to adjust a viscosity of the conductive ink to be suitable for a desired application method (discussed below). Providing a solvent comprising an alcohol can improve a stability (e.g., shelf life) of the conductive ink, for example, by decreasing settling of the conductive filler and/or hydrogen bonding with the reactive, silane-containing binder. Providing about 25 wt% or less solvent can enable the conductive ink to form a conductive film comprising sufficient thickness (e.g., about 5 µm or more).

Methods of making articles can comprise disposing the conductive ink on the substrate and then heating the conductive ink to form the conductive film. Forming the coating by heating at a temperature of about 100°C or more can be high enough to remove the solvent from the conductive ink and to allow the reaction of the reactive, silane-containing binder. Forming the coating by heating at a temperature of about 250°C or less can prevent the binder from decomposing. Forming the coating by heating at a temperature of about 250°C or less can substantially maintain a level of compressive stress in the substrate, if present.

Some example aspects of the disclosure are described below with the understanding that any of the features of the various aspects may be used alone or in combination with one another.

Aspect 1. An article comprising:
a substrate; and
a conductive film disposed on a surface of the substrate,
wherein the conductive film comprises:
   a volume resistivity in a range from about 0.01 Ohm-centimeters to about 10⁻⁵ Ohm-centimeters,
   a pencil hardness of about 8H or more; and
   a scratch resistance of about 3 Newtons or more.

Aspect 2. The article of aspect 1, wherein the conductive film comprises a conductive filler and a silane-containing binder, the silane-containing binder is bonded to the surface of the substrate.

Aspect 3. The article of aspect 2, wherein the conductive film comprises about 50 wt% or more of the conductive filler.

Aspect 4. The article of aspect 3, wherein the conductive film comprises from about 70 wt% to about 95 wt% or of the conductive filler.

Aspect 5. The article of any one of aspects 2-4, wherein the conductive filler comprises one or more of silver, copper, nickel, or gold.

Aspect 6. The article of aspect 5, wherein the conductive filler comprises silver.

Aspect 7. The article of aspect 6, wherein the silver comprises silver flake.

Aspect 8. The article of any one of aspects 2-7, wherein the conductive film comprises about 30 wt% or less of the silane-containing binder.

Aspect 9. The article of aspect 8, wherein the conductive film comprises from about 4 wt% to about 20 wt% of the silane-containing binder.

Aspect 10. The article of any one of aspects 2-9, wherein the silane-containing binder contains multiple silane functionalities.

Aspect 11. The article of any one of aspects 2-10, wherein the silane-containing binder comprises nitrogen.

Aspect 12. The article of any one of aspect 2-11, wherein the silane-containing binder is a polymer.

Aspect 13. The article of aspect 10, wherein the polymer comprises polyaminopropylsilsesquioxane.

Aspect 14. The article of any one of aspects 2-11, wherein the silane-containing binder comprises one or more of a silane-functionalized biuret, a silane-functionalized isocyanate, a urea-containing silane-functionalized binder, or a silane-containing allophanate.

Aspect 15. The article of any one of aspects 1-14, wherein the conductive film comprises about 0.3 mol silane per kg of the conductive film or more.

Aspect 16. The article of aspect 15, wherein the conductive film comprises from about 0.5 mol silane per kg of the conductive film to about 2 mol silane per kg of the conductive film.

Aspect 17. The article of any one of aspects 1-16, wherein the conductive film is resistant to removal using ethanol.

Aspect 18. The article of any one of aspects 1-17, wherein the conductive film as-formed comprises an adhesion of 5 according to ASTM D3359-17 using Tesa 4657 tape.

Aspect 19. The article of any one of aspects 1-17, wherein, after being subjected to 50 cycles between -30°C and 80°C, the conductive film comprises an adhesion of 4 or more according to ASTM D3359-17 using Tesa 4657 tape, each cycle comprising 1 hour to heat to 80°C, 4 hours at 80°C, 2 hours to cool to -30°C, and then 4 hours at -30°C.

Aspect 20. The article of any one of aspects 1-19, wherein the pencil hardness is 9H or more.

Aspect 21. The article of any one of aspects 1-20, wherein the scratch resistance is about 4 Newtons or more.

Aspect 22. The article of any one of aspects 1-21, wherein the conductive film comprises an average thickness in a range from about 5 micrometers to about 50 micrometers.

Aspect 23. The article of any one of aspects 1-22, wherein the conductive film comprises a sheet resistance from about 0.01 Ohms/square/mil to about 4 Ohms/square/mil.

Aspect 24. The article of aspect 23, wherein the sheet resistance is in a range from about 0.01 Ohms/square/mil to about 0.3 Ohms/square/mil.

Aspect 25. The article of any one of aspects 1-24, wherein the substrate comprises a glass-based material or a ceramic-based material.

Aspect 26. The article of aspect 25, wherein the substrate comprises a compressive stress region extending to a first depth of compression from the surface, the compressive stress region comprising a maximum compressive stress of about 250 MegaPascals or more.

Aspect 27. The article of aspect 26, wherein the substrate is chemically strengthened.

Aspect 28. A conductive ink comprising:
a conductive filler;
a reactive, silane-containing binder; and
a solvent.

Aspect 29. The conductive ink of aspect 28, wherein the conductive ink comprises about 50 wt% or more of the conductive filler.

Aspect 30. The conductive ink of aspect 29, wherein the conductive ink comprises from about 65 wt% to about 90 wt% or of the conductive filler.

Aspect 31. The method of any one of aspects 28-30, wherein the conductive filler comprises one or more of silver, copper, nickel, or gold.

Aspect 32. The method of aspect 31, wherein the conductive filler comprises silver.

Aspect 33. The article of aspect 32, wherein the silver comprises silver flake.

Aspect 34. The conductive ink of any one of aspects 28-33, wherein the conductive ink comprises about 30 wt% or less of the silane-containing binder.

Aspect 35. The conductive ink of aspect 34, wherein the conductive ink comprises from about 4 wt% to about 20 wt% of the silane-containing binder.

Aspect 36. The conductive ink of any one of aspects 28-35, wherein the reactive, silane-containing binder comprises an alkoxysilane or silanol functional group.

Aspect 37. The conductive ink of any one of aspects 28-36, wherein the reactive, silane-containing binder contains multiple silane functionalities.

Aspect 38. The conductive ink of any one of aspects 28-37, wherein the conductive ink comprises about 0.3 mol silane per kg of the conductive ink or more.

Aspect 39. The conductive ink of aspect 38, wherein the conductive film comprises from about 0.5 mol silane per kg of the conductive film to about 2 mol silane per kg of the conductive film.

Aspect 40. The conductive ink of any one of aspects 28-38, wherein the reactive, silane-containing binder comprises nitrogen.

Aspect 41. The conductive ink of aspect 40, wherein the reactive, silane-containing binder further comprises an amine functional group.

Aspect 42. The conductive ink of any one of aspects 28-41, wherein the silane-containing binder is a polymer.

Aspect 43. The conductive ink of aspect 42, wherein the polymer comprises polyaminopropylsilsesquioxane.

Aspect 44. The conductive ink of any one of aspects 28-41, wherein the reactive, silane-containing binder comprises one or more of a silane-functionalized biuret-containing binder, a silane-functionalized isocyanate-containing binder, a silane-functionalized urea-containing binder, or a silane-containing allophanate-containing binder.

Aspect 45. The conductive ink of any one of aspects 28-44, wherein the solvent comprises an alcohol.

Aspect 46. The conductive ink of any one of aspects 28-45, wherein the conductive ink comprises about 15 wt% or less of the solvent.

Aspect 47. The conductive ink of aspect 46, wherein the conductive ink comprises from about 3 wt% to about 10 wt% of the solvent.

Aspect 48. The conductive ink of any one of aspects 28-47, wherein the conductive ink is free of a photo-initiator.

Aspect 49. A method of forming an article comprising:
disposing a conductive ink on a surface of a substrate; and
heating the conductive ink at a first temperature from about 100°C to about 250°C for a first period of time to form a conductive film,
wherein the conductive film comprises:
   a volume resistivity in a range from about 0.01 Ohm-centimeters to about 10⁻⁵ Ohm-centimeters,
   a pencil hardness of about 8H or more; and
   a scratch resistance of about 3 Newtons or more.

Aspect 50. The method of aspect 49, wherein the first period of time is in a range from about 10 minutes to about 2 hours.

Aspect 51. The method of any one of aspects 49-50, wherein the disposing the conductive ink comprises screen printing.

Aspect 52. The method of any one of aspects 49-50, wherein the disposing the conductive ink comprises inkjet printing.

Aspect 53. The method of any one of aspects 49-50, wherein the disposing the conductive ink comprises a doctor blade method.

Aspect 54. The method of any one of aspects 49-53, wherein the disposing the conductive ink comprises pad printing.

Aspect 55. The method of any one of aspects 49-54, wherein the substrate is a glass-based material or a ceramic-based material.

Aspect 56. The method of aspect 55, wherein, before the disposing the conductive ink, the substrate comprises a compressive stress region extending to a first depth of compression from the surface, the compressive stress region comprising a maximum compressive stress of about 250 MegaPascals or more.

Aspect 57. The method of any one of aspects 55-56, wherein, before the disposing the conductive ink, the substrate is chemically strengthened.

Aspect 58. The method of aspect 55, further comprising, before the disposing the conductive ink, chemically strengthening the substrate, wherein the chemically strengthening forms a compressive stress region extending to a first depth of compression from the surface, the compressive stress region comprising a maximum compressive stress of about 250 MegaPascals or more.

Aspect 59. The method of any one of aspects 49-58, wherein the conductive ink comprises:
a conductive filler;
a reactive, silane-containing binder; and
a solvent,
wherein the solvent is removed during the heating, and the reactive, silane-containing binder reacts with the substrate during the heating.

Aspect 60. The method of aspect 59, wherein the conductive ink comprises about 50 wt% or more of the conductive filler.

Aspect 61. The method of aspect 60, wherein the conductive ink comprises from about 65 wt% to about 90 wt% or of the conductive filler.

Aspect 62. The method of any one of aspects 59-61, wherein the conductive filler comprises one or more of silver, copper, nickel, or gold.

Aspect 63. The method of aspect 62, wherein the conductive ink comprises silver.

Aspect 64. The method of aspect 63, wherein the silver comprises silver flake.

Aspect 65. The method of any one of aspects 59-64, wherein the conductive ink comprises about 30 wt% or less of the reactive, silane-containing binder.

Aspect 66. The method of aspect 65, wherein the conductive ink comprises from about 4 wt% to about 20 wt% of the reactive, silane-containing binder.

Aspect 67. The method of any one of aspects 59-66, wherein the silane-containing binder comprises an alkoxysilane or silanol functional group.

Aspect 68. The method of any one of aspects 59-67, wherein the reactive, silane-containing binder contains multiple silane functionalities.

Aspect 69. The method of any one of aspects 59-68, wherein the conductive film comprises about 0.3 mol silane per kg of the conductive film or more.

Aspect 70. The method of aspect 69, wherein the conductive film comprises from about 0.5 mol silane per kg of the conductive film to about 2 mol silane per kg of the conductive film.

Aspect 71. The method of any one of aspects 59-70, wherein the reactive, silane-containing binder comprises nitrogen.

Aspect 72. The method of aspect 71, wherein the reactive, silane-containing binder further comprises an amine functional group.

Aspect 73. The method of any one of aspects 59-72, wherein the reactive, silane-containing binder is a polymer.

Aspect 74. The method of aspect 73, wherein the polymer comprises polyaminopropylsilsesquioxane.

Aspect 75. The method of any one of aspects 59-72, wherein the reactive, silane-containing binder comprises one or more of a silane-functionalized biuret-containing binder, a silane-functionalized isocyanate-containing binder, a silane-functionalized urea-containing binder, or a silane-containing allophanate-containing binder.

Aspect 76. The method of any one of aspects 59-75, wherein the solvent comprises an alcohol.

Aspect 77. The method of any one of aspects 59-76, wherein the conductive ink comprises about 15 wt% or less of the solvent.

Aspect 78. The method of aspect 77, wherein the conductive ink comprises from about 3 wt% to about 10 wt% of the solvent.

Aspect 79. The method of any one of aspects 59-78, wherein the conductive ink is free of a photo-initiator.

Aspect 80. The method of any one of aspects 49-79, wherein the conductive film is resistant to removal using ethanol.

Aspect 81. The method of any one of aspects 49-80, wherein the conductive film as-formed comprises an adhesion of 5 according to ASTM D3359-17 using Tesa 4657 tape.

Aspect 82. The method of any one of aspects 49-81, wherein, after being subjected to 50 cycles between -30°C and 80°C, the conductive film comprises an adhesion of 4 or more according to ASTM D3359-17 using Tesa 4657 tape, each cycle comprising 1 hour to heat to 80°C, 4 hours at 80°C, 2 hours to cool to -30°C, and then 4 hours at -30°C.

Aspect 83. The method of any one of aspects 49-82, wherein the pencil hardness is 9H or more.

Aspect 84. The method of any one of aspects 49-83, wherein the scratch resistance is about 4 Newtons or more.

Aspect 85. The method of any one of aspects 49-84, wherein the conductive film comprises an average thickness in a range from about 5 micrometers to about 50 micrometers.

Aspect 86. The method of any one of aspects 49-85, wherein the conductive film comprises a sheet resistance from about 0.01 Ohms/square/mil to about 4 Ohms/square/mil.

Aspect 87. The method of aspect 86, wherein the sheet resistance is in a range from about 0.01 Ohms/square/mil to about 0.3 Ohms/square/mil.

### BRIEF DESCRIPTION OF THE DRAWINGS

The above and other features and advantages of aspects of the present disclosure are better understood when the following detailed description is read with reference to the accompanying drawings, in which:
**FIG. 1** is a schematic side view of an example article;
**FIG. 2** is a schematic side view of another example article;
**FIG. 3** is a schematic top plan view of the example coated article along line 3-3 in **FIG. 1** and/or **FIG. 2****;**
**FIG. 4** is a schematic view of an automobile comprising an article of **FIGS. 1-2****;**
**FIG. 5** is a flow chart illustrating example methods making articles in accordance with aspects of the disclosure;
**FIG. 6** schematically illustrates a step in methods of making articles in accordance with the flow chart of **FIG. 5****;**
**FIG. 7** schematically illustrates a step in methods of making articles in accordance with the flow chart of **FIG. 5****;**
**FIG. 8** schematically illustrates a step in methods of making articles in accordance with the flow chart of **FIG. 5****;**
**FIG. 9** schematically illustrates a step in methods of making articles in accordance with the flow chart of **FIG. 5****;**
**FIG. 10** schematically illustrates a step in methods of making articles in accordance with the flow chart of **FIG. 5****;**
**FIG. 11** schematically illustrates a step in methods of making articles in accordance with the flow chart of **FIG. 5****;** and
**FIG. 12** schematically illustrates a step in methods of making articles in accordance with the flow chart of **FIG. 5****.**

Throughout the disclosure, the drawings are used to emphasize certain aspects. As such, it should not be assumed that the relative size of different regions, portions, and substrates shown in the drawings are proportional to its actual relative size, unless explicitly indicated otherwise.

### DETAILED DESCRIPTION

Aspects will now be described more fully hereinafter with reference to the accompanying drawings in which example aspects are shown. Whenever possible, the same reference numerals are used throughout the drawings to refer to the same or like parts.

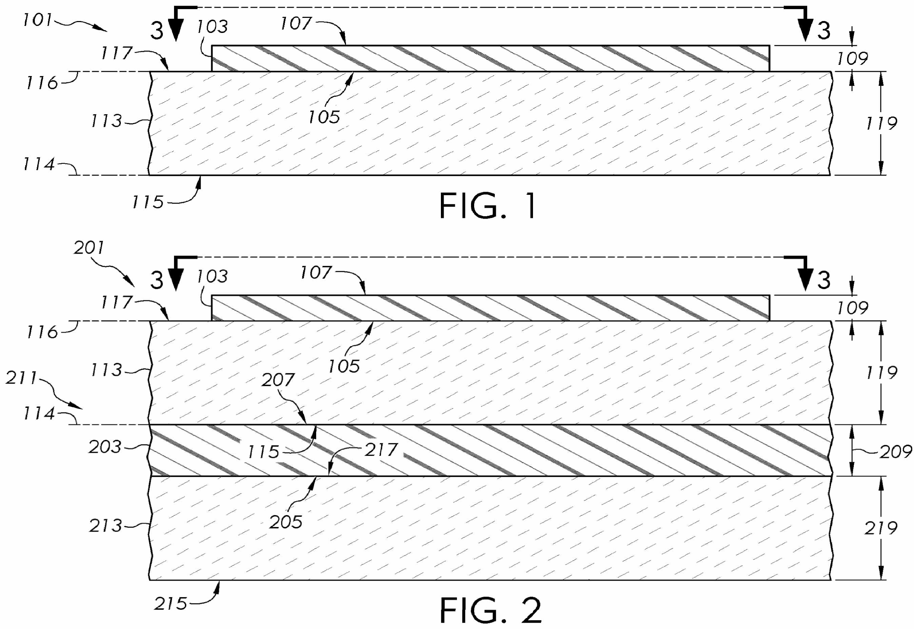

**FIGS. 1-3** illustrate views of articles **101 and 201** comprising a conductive film **103** disposed on a first substrate **113** in accordance with aspects of the disclosure. However, it is to be understood that the conductive film is not limited to such applications and can be used in other applications. Unless otherwise noted, a discussion of features of aspects of one article or conductive film can apply equally to corresponding features of any aspects of the disclosure. For example, identical part numbers throughout the disclosure can indicate that, in some aspects, the identified features are identical to one another and that the discussion of the identified feature of one aspect, unless otherwise noted, can apply equally to the identified feature of any of the other aspects of the disclosure.

Aspects of the disclosure can comprise a conductive ink. The conductive ink comprises a conductive filler. As used herein, a conductive filler means a material that is electrically conductive (e.g., volume resistivity of about 0.01 Ohm-centimeters (Ω-cm) or less) in isolation. In aspects, the conductive filler can comprise a metal, for example, one or more of silver, gold, copper, nickel, aluminum, titanium, indium, tin, zinc, chromium, platinum, palladium, ruthenium, rhodium, iridium, tungsten, and/or molybdenum. In further aspects, the conductive filler can further comprise carbon, for example, carbon black, graphite, graphene, and/or carbon nanotubes. In exemplary aspects, the conductive filler with or without carbon includes silver, gold, copper, nickel, and combinations thereof. In further aspects, the metal of the conductive filler can be silver. In even further aspects, the silver can be in the form of, for example, spheres, rods, flakes, plates, or combinations thereof. An exemplary aspect of the silver is silver flake. In aspects, an amount of the conductive filler in the conductive ink can be about 50 weight % (wt%) or more, about 65 wt% or more, about 75 wt% or more, about 80 wt% or more, about 93 wt% or less, about 90 wt% or less, about 88 wt% or less, or about 85 wt% or less. In aspects, an amount of the conductive filler in the conductive ink can be in a range from about 50 wt% to about 93 wt%, from about 65 wt% to about 90 wt%, from about 75 wt% to about 88 wt%, from about 80 wt% to about 85 wt%, or any range or subrange therebetween. In aspects, the conductive filler can be provided from a commercially available conductive ink. Providing the conductive filler in the conductive ink can enable the conductive film formed from the conductive ink to be electrically conductive. Providing at least 50 wt% of the conductive filler can enable conductivity, for example, enabling the filler to form paths through the resulting conductive ink. Providing less than 93 wt% of the conductive filler can enable good adhesion, scratch resistance, chemical resistance, and/or pencil hardness of the resulting conductive film.

The conductive ink comprises a reactive, silane-containing binder. As used herein, a reactive, silane-containing binder has a silane functional group that is capable of reacting, for example, with a silanol group of a substrate and/or a silane functional group in another reactive, silane-containing binder. In aspects, an amount of the reactive, silane-containing binder can be about 4 wt% or more, 5 wt% or more, about 8 wt% or more, about 30 wt% or less, about 20 wt% or less, or about 10 wt% or less. In aspects, an amount of the reactive, silane-containing binder can be in a range from about 4 wt% to about 30 wt%, from about 4 wt% to about 20 wt%, from about 5 wt% to about 20 wt%, from about 8 wt% to about 10 wt%, or any range or subrange therebetween. Providing about 4 wt% or more of the reactive, silane-containing binder can provide good adhesion, scratch resistance, chemical resistance, and/or pencil hardness to the resulting conductive film. Providing less than 30 wt% of the reactive, silane-containing binder can enable the resulting conductive film to be conductive, for example, by allowing the conductive filler to form paths through the conductive ink.

In aspects, the reactive, silane-containing binder can comprise silane as an alkoxysilane and/or silanol. In exemplary aspects, the alkoxysilane comprises an ethoxy silane, for example, triethoxysilane as part of the reactive, silane-containing binder. In aspects, the reactive, silane-containing binder can comprise multiple silane functionalities. In further aspects, a single molecule of the reactive, silane-containing binder can comprise 2 or more, 3 more, 4 or more, 100 or less, 10 or less, or 6 or less silane functionalities, for example, from 2 to 100, from 3 to 10, from 4 to 6, or any range therebetween. In exemplary aspects, the multi-functional silane-containing binder are bis[3-(trimethoxysilyl)propyl]amine, bis[3-(triethoxysilyl)propyl]amine, or a product of reacting three of the above molecules with a trimer of hexamethylene-1,6-diisocyanate. In further aspects, the reactive, silane-containing binder can be the result of reacting a silane molecule (discussed below) with hexamethylene-1,6-diisocyanate (HDI) or a derivate thereof, for example, HDI trimers, HDI biurets, and/or HDI allophanates.

In aspects, a concentration of silanes (on a molar basis) in the conductive ink (on a kg basis) can be about 0.3 mol/kg or more, about 0.5 mol/kg or more, about 0.8 mol/kg or more, about 2.5 mol/kg or less, about 2 mol/kg or less, about 1.5 mol/kg or less, or about 1 mol/kg or less. In aspects, a concentration of silanes (on a molar basis) in the conductive ink (on a kg basis) can be in a range from about 0.3 mol/kg to about 2.5 mol/kg, from about 0.5 mol/kg to about 2 mol/kg, from about 0.8 mol/kg to about 1.5 mol/kg, from about 1 mol/kg to about 1.5 mol/kg, or any range or subrange therebetween. Without wishing to be bound by theory, increasing a concentration of silane (e.g., reactive silanes) in conductive ink can increase a crosslinking density of the resulting conductive film and/or increase bonding between the resulting conductive film and the substrate. Providing a concentration of 0.3 mol/kg or more of silane in the conductive ink can increase an adhesion of the resulting conductive film, increase a chemical resistance of the resulting conductive film, and/or increasing a hardness of the resulting conductive film. A concentration of silane can be determined using X-ray photoelectron spectroscopy (XPS) and/or Raman spectroscopy of a sample of the conductive film, where an intensity of silicon (in XPS) or silicon-oxygen bonds (in Raman spectroscopy) can correspond to the concentration of silane.

In aspects, the silane-containing binder can comprise a vinyl functional group, a (meth)acrylate functional group, a (meth)acrylamide, a glycidyl functional group, an anhydride functional group, an amine functional group, a urea functional group, an isocyanate functional group, a thiol functional group, or combinations thereof. In aspects, the reactive, silane-containing binder can comprise nitrogen and/or sulfur. In further aspects, the nitrogen can be part of an amine functional group. In further aspects, the nitrogen-containing, reactive, silane-containing binder can comprise a silane-functionalized biuret-containing binder, a silane-functionalized isocyanate-containing binder, a silane-functionalized urea-containing binder, a silane-functionalized allophanate-containing binder, or combinations thereof. In further aspects, the sulfur can be part of a thiol functional group. Without wishing to be bound by theory, amine functional groups and thiol functional groups can form complexes with metals (e.g., conductive filler) that can stabilize the ink and/or the resulting conductive film. Providing the reactive, silane-containing binder comprising nitrogen (e.g., amine functional group) and/or sulfur (e.g., thiol functional group) can improve stability (e.g., shelf stability) of the conductive ink and/or improve adhesion of the resulting conductive film.

In aspects, the reactive, silane-containing binder can comprise a polymer. In further aspects, the silane-containing binder can comprise silicon-containing (e.g., silane) monomers. For example, silane containing monomers can comprise (3-aminopropyl)trimethoxysilane, (3-aminopropyl)triethoxysilane, (3-aminopropyl)methyldimethoxysilane, (3-aminopropyl)methyldiethoxysilane, m-aminophenyltrimethoxysilane, p-aminophenyltrimethoxysilane, 3-(m-aminophenoxy)propyltrimethoxysilane, 3-(m-aminophenoxy)propyltriethoxysilane, N-(2-aminoethyl)-3-aminopropyltrimethoxysilane, N-(2-aminoethyl)-3-aminopropyltriethoxysilane, N-(6-aminohexyl)aminomethyltrimethoxysilane, N-(6-aminohexyl)aminomethyltriethoxysilane, N-2-aminoethyl-11-aminoundecyltrimethoxysilane, N-2-aminoethyl-11-aminoundecyltriethoxysilane, aminoethylaminomethylphenethyltrimethoxysilane, aminoethylaminomethylphenethyltriethoxysilane, N-3-(aminopolypropylenoxy)aminopropyltrimethoxysilane, N-3-(aminopolypropylenoxy)aminopropyltriethoxysilane, (3-trimethoxysilylpropyl)diethylenetriaminesilane, (3-triethoxysilylpropyl)diethylenetriaminesilane, 4-amino-3,3-dimethylbutyltrimethoxysilane, 4-amino-3,3-dimethylbutyltriethoxysilane, 3-mercaptopropyltrimethoxysilane, 3-mercaptopropyltriethoxysilane, 11-mercaptoundecyltrimethoxysilane, (mercaptomethyl)methyldiethoxysilane, and/or 3-mercaptopropylmethyldimethoxysilane. An exemplary aspect of the silane-containing polymer can be polyaminopropylsilsesquioxane, for example, which can be the result of polymerizing aminopropyltriethoxysilane or aminopropyltrimethoxysilane as a monomer.

The conductive ink comprises a solvent. As used herein, "solvent" excludes the components discussed above, for example, a conductive filler, a reactive, silane-containing binder, and combinations and/or products any of thereof. Solvents do not react with the conductive filler or the reactive, silane-containing binder. Solvents can comprise one or more of a polar solvent (e.g., water, an alcohol, an acetate, acetone, formic acid, dimethylformamide, acetonitrile, dimethyl sulfoxone, nitromethane, propylene carbonate, poly(ether ether ketone)) or a non-polar solvent (e.g., pentane, 1,4-dioxane, chloroform, dichloromethane, diethyl ether, hexane, heptane, benzene, toluene, xylene). In exemplary aspects, solvents include alcohols, for example, methanol, ethanol, propanol, isopropanol, butanol, isobutanol, pentanol, cyclopentanol, hexanol, cyclohexanol, phenol, terpineol, and/or combinations thereof. In aspects, an amount of the solvent in the conductive ink can be about 3 wt% or more, about 5 wt% or more, about 8 wt% or more, about 25 wt% or less, about 15 wt% or less, or about 10 wt% or less. In aspects, an amount of the solvent in the conductive ink can be in a range from about 3 wt% to about 25 wt%, from about 5 wt% to about 15 wt%, from about 8 wt% to about 10%, or any range or subrange therebetween. Providing a solvent of about 3 wt% or more can be used to adjust a viscosity of the conductive ink such to be suitable for a desired application method (discussed below). Providing a solvent comprising an alcohol can improve a stability (e.g., shelf life) of the conductive ink, for example, by decreasing settling of the conductive filler and/or hydrogen bonding with the reactive, silane-containing binder. Providing about 25 wt% or less solvent can enable the conductive ink to form a conductive film comprising sufficient thickness (e.g., about 5 µm or more).

Throughout the disclosure, quasi-static thermogravimetric analysis (TGA) can be used to determine proportions of solvent, silane-containing binder, and/or conductive filler in the conductive ink. A wt% of solvent can be determined as a weight loss of the conductive ink from 20°C to 250°C. A wt% of the silane-containing binder can be estimated as a weight loss of the conductive ink from 250°C to 500°C. A wt% of the conductive filler can be estimated as the portion of the conductive ink remaining after the above heating process (i.e., after 500°C).

In some embodiments, the composition can be substantially-free and/or free of a photo-initiator. As used herein, a photo-initiator is a compound sensitive to one or more wavelengths that upon absorbing light comprising the one or more wavelengths undergoes a reaction to produce one or more radicals or ionic species that can initiate a polymerization reaction. For example, photo-initiators may be sensitive to one or more wavelengths of ultraviolet (UV) light or visible light. Photo-initiators sensitive to UV light include benzoin ethers, benzil ketals, dialkoxyacetophenones, hydroxyalkylphenones, aminoalkylphenones, acylphosphine oxides, thioxanthones, hydroxyalkylketones, and thoxanthanamines. In further embodiments, the photo-initiator may be sensitive to one or more wavelengths of visible light. Photo-initiators sensitive to visible light include 5,7-diiodo-3-butoxy-6-fluorone, bis (4-methoxybenzoyl) diethylgermanium, bis(2,4,6-trimethylbenzoyl)-phenylphosphineoxide, 3-methyl-4-aza-6-helicene, and thiocyanide borates.

It is to be understood that any of the above ranges for the above-mentioned components can be combined in embodiments of the disclosure. Example ranges of some embodiments of the disclosure are presented in Table 1. R1 has the broadest of the range in Table 1 while R5 has the narrowest ranges of the ranges in Table 1. R2-R4 represent intermediate ranges. Again, it is to be understood that other ranges or subranges discussed above for these components can be used in combination with any of the ranges presented in Table 1.

**Table 1: Composition ranges (wt%) of embodiments of conductive inks**

| Range | R1 | R2 | R3 | R4 | R5 |
|---|---|---|---|---|---|
| Conductive Filler | 50-93 | 65-90 | 50-93 | 50-93 | 65-90 |
| Reactive, Silane-containing binder | 4-30 | 4-30 | 4-20 | 4-30 | 4-20 |
| Solvent | 3-25 | 3-25 | 3-25 | 3-10 | 3-10 |

Aspects of the disclosure can comprise articles. **FIGS. 1-3** illustrate views of articles **101 and 201** comprising a conductive film **103** disposed on a first substrate **113** in accordance with aspects of the disclosure. Unless otherwise noted, a discussion of features of aspects of one coated article can apply equally to corresponding features of any aspects of the disclosure. For example, identical part numbers throughout the disclosure can indicate that, in some aspects, the identified features are identical to one another and that the discussion of the identified feature of one aspect, unless otherwise noted, can apply equally to the identified feature of any of the other aspects of the disclosure.

As shown in **FIGS. 1-2****,** the first substrate **113** of each of the articles **101 and 201** comprises a first major surface **115** and a second major surface **117** opposite the first major surface **115.** In aspects, as shown, the first major surface **115** can extend along a first plane **114,** and/or the second major surface **117** can extend along a second plane **116.** In further aspects, as shown, the first plane **114** and the first major surface **115** can be parallel to the second plane **116** and the second major surface **117.** As shown in **FIGS. 1-2****,** the first substrate **113** can comprise a first substrate thickness **119** defined as an average distance between the first major surface **115** and the second major surface **117.** In aspects, the first substrate thickness **119** can be about 25 micrometers (µm) or more, about 80 µm or more, about 100 µm or more, about 125 µm or more, about 150 µm or more, about 200 µm or more, about 500 µm or more, about 700 µm or more, about 5 millimeters (mm) or less, about 3 mm or less, about 2 mm or less, about 1 mm or less, about 800 µm or less, about 500 µm or less, about 300 µm or less, about 200 µm or less, about 180 µm or less, or about 160 µm or less. In aspects, the first substrate thickness **119** can be less in a range from about 25 µm to about 5 mm, from about 25 µm to about 3 mm, from about 25 µm to about 2 mm, from about 80 µm to about 1 mm, from about 80 µm to about 800 µm, from about 100 µm to about 500 µm, from about 100 µm to about 300 µm, from about 125 µm to about 200 µm, from about 150 µm to about 160 µm, or any range or subrange therebetween. In aspects, the first substrate thickness **119** can be about 500 µm or more, for example, from about 500 µm to about 3 mm, from about 700 µm to about 2 mm, from about 700 µm to about 1 mm, or any range or subrange therebetween.

The first substrate **113** can comprise a glass-based material and/or a ceramic-based material. For example, the first substrate **113** can comprise a glass-based material and/or a ceramic-based material having a pencil hardness of 8H or more, for example, 9H or more. As used herein, pencil hardness is measured using ASTM D 3363-20 with standard lead graded pencils. Throughout the disclosure, an elastic modulus (e.g., Young's modulus) is measured using ISO 527-1:2019. In aspects, the first substrate **113** can comprise an elastic modulus of about 1 GigaPascal (GPa) or more, about 10 GPa or more, about 30 GPa or more, about 100 GPa or less, about 80 GPa or less, about 75 GPa or less. In aspects, the first substrate **113** can comprise an elastic modulus in a range from about 1 GPa to about 100 GPa, from about 10 GPa to about 80 GPa, from about 30 GPa to about 80 GPa, from about 50 GPa to about 75 GPa, or any range or subrange therebetween.

In aspects, the first substrate **113** can comprise a glass-based material. As used herein, "glass-based" includes both glasses and glass-ceramics, wherein glass-ceramics have one or more crystalline phases and an amorphous, residual glass phase. A glass-based material can comprise an amorphous material (e.g., glass) and optionally one or more crystalline materials (e.g., ceramic). Amorphous materials and glass-based materials can be strengthened. As used herein, the term "strengthened" can refer to a material that has been chemically strengthened, for example, through ion exchange of larger ions for smaller ions in the surface of the substrate. As used here, the term "strengthened" can also refer to a material strengthened by other techniques, for example, thermal tempering, or utilizing a mismatch of the coefficient of thermal expansion between portions of the substrate to create compressive stress and central tension regions, can be utilized to form strengthened substrates. Exemplary glass-based materials, which may be free of lithia or not, comprise soda-lime glass, alkali aluminosilicate glass, alkali-containing borosilicate glass, alkali-containing aluminoborosilicate glass, alkali-containing phosphosilicate glass, and alkali-containing aluminophosphosilicate glass. In aspects, glass-based material can comprise an alkali-containing glass or an alkali-free glass, either of which may be free of lithia or not. In aspects, the glass material can be alkali-free and/or comprise a low content of alkali metals (e.g., R₂O of about 10 mol% or less, wherein R₂O comprises Li₂O Na₂O, K₂O). "Glass-ceramics" include materials produced through controlled crystallization of glass. In aspects, glass-ceramics have about 1% to about 99% crystallinity. Examples of suitable glass-ceramics may include Li₂O-Al₂O₃-SiO₂ system (i.e., LAS-System) glass-ceramics, MgO-Al₂O₃-SiO₂ system (i.e., MAS-System) glass-ceramics, ZnO × Al₂O₃ × nSiO₂ (i.e., ZAS system), and/or glass-ceramics that include a predominant crystal phase including β-quartz solid solution, β-spodumene, cordierite, petalite, and/or lithium disilicate. The glass-ceramic substrates may be strengthened using the chemical strengthening processes. In one or more aspects, MAS-System glass-ceramic substrates may be strengthened in Li₂SO₄ molten salt, whereby an exchange of 2Li⁺ for Mg²⁺ can occur.

In aspects, the first substrate **113** can comprise a ceramic-based material. As used herein, "ceramic-based" includes both ceramics and glass-ceramics, wherein glass-ceramics have one or more crystalline phases and an amorphous, residual glass phase. Ceramic-based materials can be strengthened (e.g., chemically strengthened). In aspects, a ceramic-based material can be formed by heating a glass-based material to form ceramic (e.g., crystalline) portions. In further aspects, ceramic-based materials can comprise one or more nucleating agents that can facilitate the formation of crystalline phase(s). In aspects, ceramic-based materials can comprise one or more oxides, nitrides, oxynitrides, carbides, borides, and/or silicides. Example aspects of ceramic oxides include zirconia (ZrO₂), zircon (ZrSiO₄), an alkali-metal oxide (e.g., sodium oxide (Na₂O)), an alkali earth metal oxide (e.g., magnesium oxide (MgO)), titania (TiO₂), hafnium oxide (Hf₂O), yttrium oxide (Y₂O₃), iron oxides, beryllium oxides, vanadium oxide (VO₂), fused quartz, mullite (a mineral comprising a combination of aluminum oxide and silicon dioxide), and spinel (MgAl₂O₄). Example aspects of ceramic nitrides include silicon nitride (Si₃N₄), aluminum nitride (AlN), gallium nitride (GaN), beryllium nitride (Be₃N₂), boron nitride (BN), tungsten nitride (WN), vanadium nitride, alkali earth metal nitrides (e.g., magnesium nitride (Mg₃N₂)), nickel nitride, and tantalum nitride. Example aspects of oxynitride ceramics include silicon oxynitride, aluminum oxynitride, and a silicon-aluminum oxynitride. Example aspects of carbides and carbon-containing ceramics include silicon carbide (SiC), tungsten carbide (WC), an iron carbide, boron carbide (B₄C), alkali-metal carbides (e.g., lithium carbide (Li₄C₃)), alkali earth metal carbides (e.g., magnesium carbide (Mg₂C₃)), and graphite. Example aspects of borides include chromium boride (CrB₂), molybdenum boride (Mo₂B₅), tungsten boride (W₂B₅), iron boride, titanium boride, zirconium boride (ZrB₂), hafnium boride (HfB₂), vanadium boride (VB₂), Niobium boride (NbB₂), and lanthanum boride (LaB₆). Example aspects of silicides include molybdenum disilicide (MoSi₂), tungsten disilicide (WSi₂), titanium disilicide (TiSi₂), nickel silicide (NiSi), alkali earth silicide (e.g., sodium silicide (NaSi)), alkali-metal silicide (e.g., magnesium silicide (Mg₂Si)), hafnium disilicide (HfSi₂), and platinum silicide (PtSi).

In aspects, the first substrate **113** can be optically transparent. As used herein, "optically transparent" or "optically clear" means an average transmittance of 70% or more in the wavelength range of 400 nm to 700 nm through a 1.0 mm thick piece of a material. Throughout the disclosure, transmittance (and average transmittance) is measured in accordance with ASTM C1649-14(2021). In aspects, an "optically transparent material" or an "optically clear material" can have an average transmittance of 75% or more, 80% or more, 85% or more, or 90% or more, 92% or more, 94% or more, 96% or more in the wavelength range of 400 nm to 700 nm through a 1.0 mm thick piece of the material. The average transmittance in the wavelength range of 400 nm to 700 nm is calculated by measuring the transmittance of whole number wavelengths from about 400 nm to about 700 nm and averaging the measurements. For example, the first substrate **113** can comprise a transmittance in a range from about 80% to about 92%, from about 85% to about 91%, from about 88% to about 91%, or any range or subrange therebetween.

As shown in **FIGS. 1-2****,** the conductive film **103** can comprise a first surface area **105** and a second surface area **107** opposite the first surface area **105.** In aspects, as shown in **FIGS. 1-2****,** the first surface area **105** can comprise a planar surface, and/or the second surface area **107** can comprise a planar surface. A conductive film thickness **109** of the conductive film **103** can be defined as an average distance between the first surface area **105** and the second surface area **107** in a direction perpendicular to the second major surface **117.** In aspects, the conductive film thickness **109** can be about 5 micrometers (µm) or more, about 8 µm or more, about 10 µm or more, about 50 µm or less, about 30 µm or less, about 20 µm or less, or about 15 µm or less. In aspects, the conductive film thickness **109** can be in a range from about 5 µm to about 50 µm, from about 8 µm to about 30 µm, from about 10 µm to about 20 µm, from about 10 µm to about 15 µm, or any range or subrange therebetween.

As used herein, if a first layer and/or component is described as "disposed on" a second layer and/or component, other layers may or may not be present between the first layer and/or component and the second layer and/or component. Furthermore, as used herein, "disposed on" does not refer to a relative position with reference to gravity. For example, a first layer and/or component can be considered "disposed on" a second layer and/or component, for example, when the first layer and/or component is positioned underneath, above, or to one side of a second layer and/or component. As used herein, a first layer and/or component described as "bonded to" a second layer and/or component means that the layers and/or components are bonded to each other, either by direct contact and/or bonding between the two layers and/or components or via an adhesive layer. As used herein, a first layer and/or component described as "contacting" or "in contact with" a second layer and/or components refers to direct contact and includes the situations where the layers and/or components are bonded to each other.

In aspects, as shown in **FIGS. 1-3****,** the second surface area **107** of the conductive film **103** can be an exterior surface of the article **101 and/or 201.** In aspects, as shown in **FIGS. 1-2****,** the conductive film **103** (e.g., the first surface area **105**) can be disposed on the first substrate **113** (e.g., the second major surface **117**). In further aspects, as shown in **FIGS. 1-2****,** the conductive film **103** (e.g., the first surface area **105**) can contact and be bonded to the first substrate **113** (e.g., second major surface **117**) as discussed below.

In aspects, the conductive film **103** can comprise a conductive filler and a silane-containing binder. In further aspects, the conductive filler can comprise one or more of the materials discussed below with reference to the conductive ink, for example, silver, gold, copper, or nickel. An exemplary aspect of the conductive filler is silver (e.g., silver flake). In even further aspects, as discussed above, the conductive filler can comprise metal in combination with carbon. In further aspects, an amount of the conductive filler in the conductive film **103** can be about 50 wt% or more, about 70 wt% or more, about 80 wt% or more, about 85 wt% or more, about 98 wt% or less, about 95 wt% or less, about 92 wt% or less, or about 90 wt% or less. In further aspects, an amount of the conductive filler in the conductive film **103** can be in a range from about 50 wt% to about 98 wt%, from about 70 wt% to about 95%, from about 80 wt% to about 92 wt%, from about 85 wt% to about 90 wt%, or any range or subrange therebetween.

In further aspects, the silane-containing binder of the conductive film **103** can be bonded to the second major surface **117** of the first substrate **113.** For example, a silane functional group of the silane-containing binder can attach the silane-containing binder to the substrate. In further aspects, the silane-containing binder can comprise one or more of the materials discussed above with reference to the conductive ink. For example, the silane-containing binder can comprise nitrogen (e.g., an amine functional group, a silane-functionalized biuret-containing binder, a silane-functionalized isocyanate-containing binder, a silane-functionalized urea-containing binder, a silane-functionalized allophanate-containing binder, or combinations thereof) and/or sulfur (e.g., a thiol functional group). For example, the silane-containing binder can comprise a polymer (e.g., polyaminopropylsilsesquioxane). In further aspects, the silane-containing binder can comprise multiple silane functionalities. In further aspects, a concentration of silanes (on a molar basis) in the conductive film (on a kg basis) can be within one or more of the ranges discussed above for the concentration of silanes in the conductive ink. In further aspects, an amount of the silane-containing binder in the conductive film can be within one or more of the ranges for the amount of the silane-containing binder in the conductive ink discussed above.

In aspects, the conductive film **103** (e.g., second surface area **107**) can comprise a pencil hardness of about 8H or more, about 9H or more, or greater than 9H, as measured in accordance with ASTM D 3363-20 with standard lead graded pencils. Throughout the disclosure, scratch resistance is measured in accordance with ISO 1518-1:2011 using a sclerometer. In aspects, the conductive film **103** (e.g., second surface area **107**) can comprise a scratch resistance of about 3 Newtons (N) or more, about 4 N or more, about 5 N or more, about 15 N or less, about 10 N or less, or 7 N or less. In aspects, the conductive film **103** (e.g., second surface area **107**) can comprise a scratch resistance in a range from about 3 N to about 15 N, from about 4 N to about 10 N, from about 5 N to about 7 N, or any range or subrange therebetween.

Throughout the disclosure, volume resistivity is measured in accordance with ASTM B193-16 for a test length of 100 mm and test width of 1 mm. Throughout the disclosure, sheet resistance is measured in accordance with ASTM F1711-96. As used herein, sheet resistance is measured in Ohms per square millimeter (Ω/sq/mil). In aspects, the conductive film **103** can comprise a volume resistivity of about 10⁻⁵ Ω-cm or more, about 10⁻⁴ Ω-cm or more, about 0.01 Q-cm or less, or about 0.001 Q-cm or less. In aspects, the conductive film **103** can comprise a volume resistivity in a range from about 0.01 Q-cm to about 10⁻⁵ Ω-cm, from about 0.001 Q-cm to about 10⁻⁴ Ω-cm, or any range or subrange therebetween. In aspects, the conductive film **103** can comprise a sheet resistance of about 0.01 Ω/sq/mil or more, about 0.1 Ω/sq/mil or more, about 4 Q/sq/mil or less, about 1 Q/sq/mil or less, or about 0.3 Ω/sq/mil or less. In aspects, the conductive film **103** can comprise a sheet resistance in a range from about 0.01 Ω/sq/mil to about 4 Q/sq/mil, from about 0.01 Ω/sq/mil to about 1 Q/sq/mil, from about 0.01 Ω/sq/mil to about 0.3 Ω/sq/mil, from about 0.1 Ω/sq/mil to about 0.3 Ω/sq/mil, or any range or subrange therebetween.

Throughout the disclosure, adhesion is measured in accordance with ASTM D3359-17 Method A using Tesa 4657 tape, where adhesion is rated on a scale from 0 to 5 with 5 corresponding to the greatest adhesion. In aspects, the adhesion of the conductive film **103** as-formed can comprise an adhesion of 5. As used herein, a temperature-cycled adhesion is measured as above (in accordance with ASTM D3359-17 Method A using Tesa 4657 tape), but the measurement is done after the conductive film is subjected to 50 cycles between -30°C and 80°C. Each cycle between -30°C and 80°C comprises 1 hour to heat to 80°C, 4 hours at 80°C, 2 hours to cool to -30°C, and then 4 hours at -30°C. In aspects, the conductive film **103** can comprise a temperature-cycled adhesion (i.e., after the conductive film is subjected to 50 cycles between -30°C and 80°C) of 4 or more, or 5.

Throughout the disclosure, chemical resistance of the conductive film to a solvent is evaluated by manually wiping a Kimwipe (Kimtech, Kimberly-Clark) soaked in the solvent across the conductive film for 1 minute. A conductive film is considered to be resistant to a solvent if at least two of the following conditions are met: (i) the conductive film appears to be in-tact when visually examined by the naked eye, (ii) the conductive film maintains an adhesion of 5 (in accordance with ASTM D3359-17 Method A using Tesa 4657 tape), or (iii) the volume resistivity does not change by more than 5% between a measurement before the wiping and a measurement 5 minutes after the wiping. In some aspects, the conductive film **103** can meet all three of the conditions set forth above for chemical resistance (e.g., when tested with ethanol and/or acetone). In some aspects, the conductive film **103** can be resistant (i.e., have a chemical resistance) to ethanol. In some aspects, the conductive film **103** can be resistant (i.e., have a chemical resistance) to acetone.

In aspects, as shown in **FIG. 2****,** the first substrate **113** of the article **201** can be part of a laminate **211** comprising the first substrate **113,** a second substrate **213,** and an interlayer **203** positioned therebetween. In further aspects, the second substrate can comprise a glass-based material and/or a ceramic-based material. In further aspects, as shown in **FIG. 2****,** the second substrate **213** can comprise a third major surface **215** and a fourth major surface **217** opposite the third major surface **215.** In even further aspects, the third major surface **215** and/or the fourth major surface **217** can a comprise planar surface. In still further aspects, the third major surface **215** and/or the fourth major surface **217** of the second substrate **213** can be parallel to the first major surface **115** and/or the second major surface **117** of the first substrate **113.** In even further aspects, a second substrate thickness **219** can be defined between the third major surface **215** and the fourth major surface **217** as an average distance between the third major surface **215** and the fourth major surface **217** perpendicular to the second major surface **117.** In still further aspects, the second substrate thickness **219** can be within one or more of the ranges discussed above for the first substrate thickness **119.** In still further aspects, the second substrate thickness **219** can be greater than, less than, or substantially equal to the first substrate thickness **119.**

In aspects, as shown in **FIG. 2****,** interlayer **203** can comprise a first contact surface **205** and a second contact surface **207** opposite the first contact surface **205.** In further aspects, the first contact surface **205** can face and/or be bonded to the fourth major surface **217** of the second substrate **213.** In further aspects, the second contact surface **207** can face and/or be bonded to the second major surface **117** of the first substrate **113.** In further aspects, an interlayer thickness **209** can be defined between the first contact surface **205** and the second contact surface **207** as an average distance between the first contact surface **205** and the second contact surface **207** perpendicular to the second major surface **117.** In even further aspects, the interlayer thickness **209** can be about 0.125 mm or more, about 0.25 mm or more, about 0.38 mm or more, about 0.5 mm or more, about 0.7 mm or more, about 2 mm or less, about 1.2 mm or less, about 1.1 mm or less, about 1 mm or less, about 0.9 mm or less, or about 0.8 mm or less. In even further aspects, the interlayer thickness **209** can be in a range from about 0.125 mm to about 2 mm, from about 0.25 mm to about 1.2 mm, from about 0.38 mm to about 1 mm, from about 0.5 mm to about 0.9 mm, from about 0.7 mm to about 0.8 mm, or any range or subrange therebetween. In aspects, the interlayer **203** can comprise a polymeric material, for example, polyvinyl butyral (PVB), ethylenevinylacetate (EVA), polyvinyl chloride (PVC), ionomers, and/or thermoplastic polyurethanes (TPU).

In aspects, the first substrate **113** and/or the second substrate **213** can comprise a glass-based substrate and/or a ceramic-based substrate and can comprise one or more compressive stress regions. In aspects, a compressive stress region can be created by chemically strengthening. Chemically strengthening comprises an ion exchange process, where ions in a surface layer are replaced by-or exchanged with-larger ions having the same valence or oxidation state. Methods of chemically strengthening will be discussed later. A compressive stress region can extend into a portion of the first portion and/or the second portion for a depth called the depth of compression. As used herein, depth of compression means the depth at which the stress in the chemically strengthened substrates and/or portions described herein changes from compressive stress to tensile stress. Depth of compression is measured by a surface stress meter or a scattered light polariscope (SCALP, wherein values reported herein were made using SCALP-5 made by Glasstress Co., Estonia) depending on the ion exchange treatment and the thickness of the article being measured. Where the stress in the substrate (e.g., first substrate **113,** second substrate **213**) is generated by exchanging potassium ions into the substrate, a surface stress meter, for example, the FSM-6000 (Orihara Industrial Co., Ltd. (Japan)), is used to measure depth of compression. Unless specified otherwise, compressive stress (including surface CS) is measured by surface stress meter (FSM) using commercially available instruments, for example the FSM-6000, manufactured by Orihara. Surface stress measurements rely upon the accurate measurement of the stress optical coefficient (SOC), which is related to the birefringence of the glass. Unless specified otherwise, SOC is measured according to Procedure C (Glass Disc Method) described in ASTM standard C770-16(2020), entitled "Standard Test Method for Measurement of Glass Stress-Optical Coefficient," the contents of which are incorporated herein by reference in their entirety. Where the stress is generated by exchanging sodium ions into the substrate, and the article being measured is thicker than about 400 µm, SCALP is used to measure the depth of compression and central tension (CT). Where the stress in the substrate and/or portion is generated by exchanging both potassium and sodium ions into the substrate and/or portion, and the article being measured is thicker than about 400 µm, the depth of compression and CT are measured by SCALP. Without wishing to be bound by theory, the exchange depth of sodium may indicate the depth of compression while the exchange depth of potassium ions may indicate a change in the magnitude of the compressive stress (but not the change in stress from compressive to tensile). The refracted near-field (RNF; the RNF method is described in U.S. Patent No. 8,854,623, entitled "Systems and methods for measuring a profile characteristic of a glass sample", which is incorporated herein by reference in its entirety) method also may be used to derive a graphical representation of the stress profile. When the RNF method is utilized to derive a graphical representation of the stress profile, the maximum central tension value provided by SCALP is utilized in the RNF method. The graphical representation of the stress profile derived by RNF is force balanced and calibrated to the maximum central tension value provided by a SCALP measurement. As used herein, "depth of layer" (DOL) means the depth that the ions have exchanged into the substrate and/or portion (e.g., sodium, potassium). Through the disclosure, when the maximum central tension cannot be measured directly by SCALP (as when the article being measured is thinner than about 400 µm) the maximum central tension can be approximated by a product of a maximum compressive stress and a depth of compression divided by the difference between the thickness of the substrate and twice the depth of compression, wherein the compressive stress and depth of compression are measured by FSM.

In aspects, the first substrate **113** and/or the second substrate **213** can be substantially unstrengthened. As used herein, substantially unstrengthened refers to a substrate comprising either no depth of compression or a depth of compression in a range from 0% to about 5% of the substrate thickness. In aspects, the first substrate **113** can be chemically strengthened. In further aspects, the first substrate **113** can be chemically strengthened and the second substrate **213** can be substantially unstrengthened. In further aspects, both the first substrate **113** and the second substrate **213** can be chemically strengthened. In aspects, the first substrate **113** can be substantially unstrengthened while the second substrate **213** can be chemically strengthened. In aspects, both the first substrate **113** and the second substrate **213** can be substantially unstrengthened.

In aspects, the first substrate **113** comprising the glass-based portion and/or ceramic-based portion can comprise a first compressive stress region at the first major surface **115** that can extend to a first depth of compression from the first major surface **115.** In aspects, the first substrate **113** comprising a first glass-based and/or ceramic-based portion can comprise a second compressive stress region at the second major surface **117** that can extend to a second depth of compression from the second major surface **117.** In aspects, the first depth of compression and/or the second depth of compression as a percentage of the first substrate thickness **119** can be about 1% or more, about 5% or more, about 10% or more, about 30% or less, about 25% or less, or about 20% or less. In aspects, the first depth of compression and/or the second depth of compression as a percentage of the first substrate thickness **119** can be in a range from about 1% to about 30%, from about 5% to about 25%, from about 10% to about 20%, or any range or subrange therebetween. In further aspects, the first depth of compression and/or the second depth of compression as a percentage of the first substrate thickness **119** can be about 10% or less, for example, from about 1% to about 10%, from about 3% to about 8%, from about 5% to about 8%, or any range or subrange therebetween. In further aspects, the first depth of compression can be substantially equal to the second depth of compression. In aspects, the first depth of compression and/or the second depth of compression can be about 1 µm or more, about 10 µm or more, about 30 µm or more, about 50 µm or more, about 200 µm or less, about 150 µm or less, about 100 µm or less, or about 60 µm or less. In aspects, the first depth of compression and/or the second depth of compression can be in a range from about 1 µm to about 200 µm, from about 10 µm to about 150 µm, from about 30 µm to about 100 µm, from about 50 µm to about 60 µm, or any range or subrange therebetween.

In aspects, the first compressive stress region can comprise a maximum first compressive stress. In aspects, the second compressive stress region can comprise a maximum second compressive stress. In further aspects, the maximum first compressive stress and/or the maximum second compressive stress can be about 250 MegaPascals (MPa) or more, about 300 MPa or more, about 500 MPa or more, about 600 MPa or more, about 700 MPa or more, about 1,500 MPa or less, about 1,200 MPa or less, about 1,000 MPa or less, or about 800 MPa or less. In further aspects, the maximum first compressive stress and/or the maximum second compressive stress can be in a range from about 250 MPa to about 1,500 MPa, from about 300 MPa to about 1,200 MPa, from about 500 MPa to about 1,000 MPa, from about 600 MPa to about 1,000 MPa, from about 700 MPa to about 800 MPa, or any range or subrange therebetween.

In aspects, the first substrate **113** can comprise a first tensile stress region. In aspects, the first tensile stress region can be positioned between the first compressive stress region and the second compressive stress region. In aspects, the first tensile stress region can comprise a maximum first tensile stress. In further aspects, the maximum first tensile stress can be about 10 MPa or more, about 20 MPa or more, about 30 MPa or more, about 100 MPa or less, about 80 MPa or less, or about 60 MPa or less. In further aspects, the maximum first tensile stress can be in a range from about 10 MPa to about 100 MPa, from about 20 MPa to about 80 MPa, from about 30 MPa to about 60 MPa, or any range or subrange therebetween.

In aspects, the second substrate **213** comprising the glass-based portion and/or ceramic-based portion can comprise a first compressive stress region at the third major surface **215** that can extend to a third depth of compression from the third major surface **215.** In further aspects, the third depth of compression, either in micrometers or as a percentage of the second substrate thickness **219,** can be within one or more of the corresponding ranges discussed above with reference to the first depth of compression. In further aspects, the third compressive stress region can comprise a maximum third compressive stress, which can be within one or more of the ranges discussed above for the maximum first compressive stress.

In aspects, the second substrate **213** comprising a first glass-based and/or ceramic-based portion can comprise a second compressive stress region at the fourth major surface **217** that can extend to a fourth depth of compression from the fourth major surface **217.** In further aspects, the fourth depth of compression, either in micrometers or as a percentage of the second substrate thickness **219,** can be within one or more of the corresponding ranges discussed above with reference to the first depth of compression. In further aspects, the fourth compressive stress region can comprise a maximum fourth compressive stress, which can be within one or more of the ranges discussed above for the maximum first compressive stress.

In aspects, the second substrate **213** can comprise a second tensile stress region. In aspects, the second tensile stress region can be positioned between the third compressive stress region and the fourth compressive stress region. In aspects, the second tensile stress region can comprise a maximum second tensile stress, which can be within one or more of the ranges discussed above for the maximum first tensile stress.

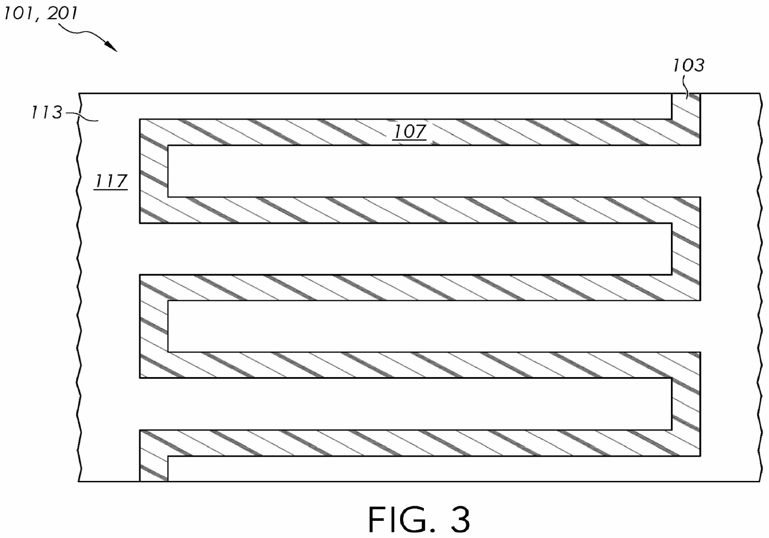

In aspects, as shown in **FIG. 3****,** the conductive film **103** of the article **101 and/or 201** can be disposed on the second major surface **117** of the first substrate **113** in a pattern. In further aspects, as shown, the pattern can correspond to a conductive trace, where the conductive film corresponds to a continuous, electrically conductive path on the second major surface **117** of the first substrate **113.** In further aspects, as shown, the pattern can correspond to a serpentine shape of the conductive film **103.** In aspects, the article **101 and/or 201** may comprise more than one of the conductive films **103.** For example, in aspects, the article **201** may comprise a first conductive film **103** on the second major surface **117** and a second conductive film **103** on the first major surface **115** opposite the second major surface **117.** In aspects, the article **201** may comprise one conductive film **103** disposed on the first major surface **115** adjacent the interlayer **203.** Any of the major surfaces **215, 217, 115, and 117** may comprise the conductive film **103** individually or in combination with any number of the others of the major surfaces **215, 217, 115, and 117.**

In aspects, the conductive film **103** may be locally applied to the article **101** and/or **201** (e.g., over a sub-region of a major surface). For example, in aspects, the article **201** may be incorporated into an automobile as a front windshield, and the conductive film **103** may be locally applied in regions of the front windshield proximate to where an advanced driver-assistance system (e.g., sensor, camera) is placed. In aspects, the conductive film **103** can be conductively connected to an on-board current source that may transmit an electrical signal to the conductive film **103** to heat the conductive film **103** to facilitate operation of the advanced driver-assistance system over a wide range of operating conditions.

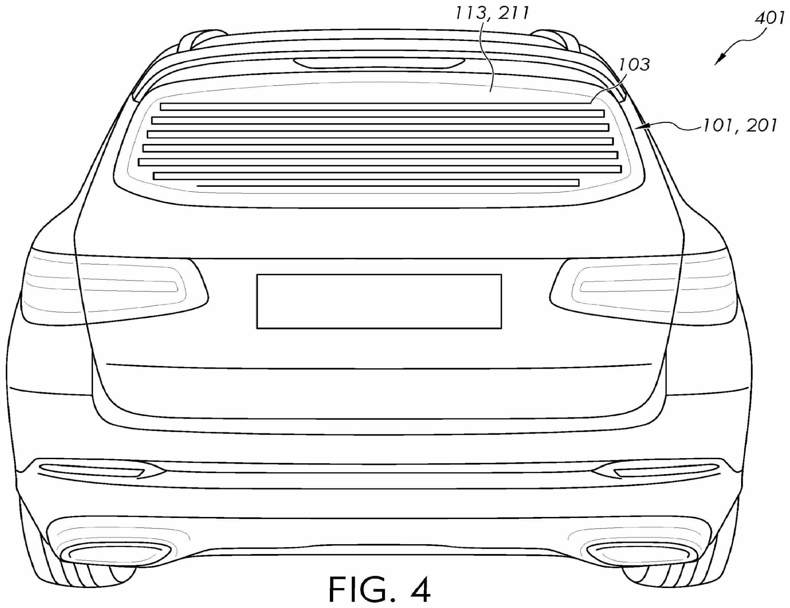

Aspects of the disclosure can comprise the article **101 and/or 201** as part of a transportation article (e.g., automotive, trains, aircraft, sea craft, etc.). For example, as shown in **FIG. 4****,** an automobile **401** can comprise the article **101 and/or 201.** The article **101 and/or 201** can correspond to a mirror or a window of the automobile, for example, a front windshield, a rear window, or a side window. In aspects, as shown in **FIG. 4****,** the article **101 and/or 201** can comprise the rear windshield of the automobile **401.** In further aspects, as shown, the conductive film **103** is disposed on the first substrate **113** and/or the laminate **211.** In even further aspects, the conductive film **103** can be positioned in an interior of the automobile **401.** In even further aspects, the conductive film can be positioned on an exterior of the automobile **401.** In aspects, the conductive film **103** can be conductively connected to an on-board current source that may transmit an electrical signal to the conductive film **103,** which can provide an anti-fogging function to the windshield.

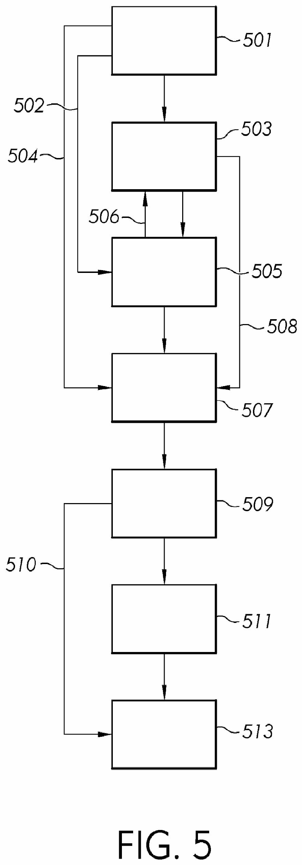

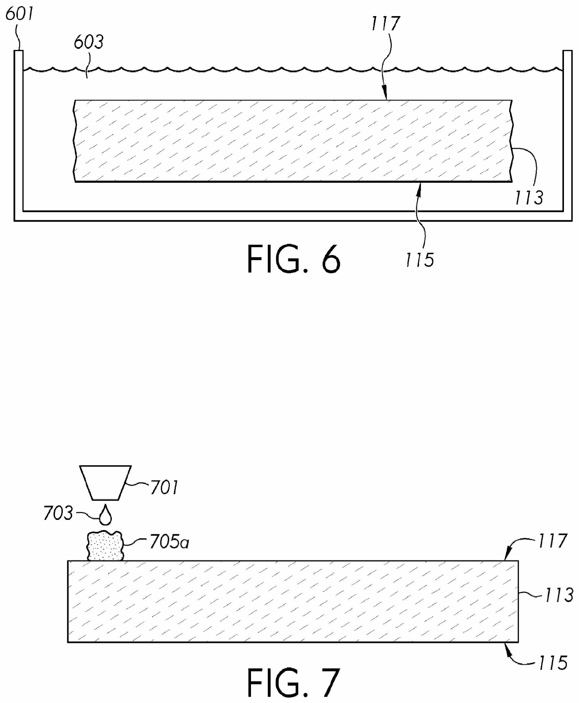

Aspects of methods of making the coated article and/or substrate in accordance with aspects of the disclosure will be discussed with reference to the flow chart in **FIG. 5** and example method steps illustrated in **FIGS. 6-12****.** Example aspects of making the article **101 and/or 201** illustrated in **FIGS. 1-2** will now be discussed with reference to **FIGS. 6-****12** and the flow chart in **FIG. 5****.** In a first step **501** of methods of the disclosure, methods can start with providing a first substrate **113.** In aspects, the first substrate **113** may be provided by purchase or otherwise obtaining a substrate or by forming the first substrate. In aspects, the first substrate **113** can comprise a glass-based substrate and/or a ceramic-based substrate. In further aspects, glass-based substrates and/or ceramic-based substrates can be provided by forming them with a variety of ribbon forming processes, for example, slot draw, down-draw, fusion down-draw, up-draw, press roll, redraw, or float. In further aspects, ceramic-based substrates can be provided by heating a glass-based substrate to crystallize one or more ceramic crystals. In aspects, the first substrate **113** can be strengthened, for example, chemically strengthened and/or thermally strengthened, with one or more compressive stress regions, as discussed above. The first substrate **113** may comprise the first major surface **115** and the second major surface **117** opposite the first major surface **115** with the first substrate thickness **119** defined therebetween. In aspects, at the end of step **501,** the first substrate **113** can be attached to the second substrate **213** by the interlayer **203.** In aspects, step **501** can comprise providing a second substrate **213,** which can be formed or purchased similar to the first substrate. In aspects, step **501** can comprise providing the interlayer **203.** In aspects, step **501** can comprise providing the conductive ink, or step **501** can comprise providing the components for the conductive ink, which can be formed in step **505,** as discussed below.

After step **501,** as shown in **FIG. 6****,** methods can proceed to step **503** comprising chemically strengthening the first substrate **113** and/or the second substrate **213.** In aspects, the first substrate **113** can be chemically strengthened to from the first compressive stress region extending to a first depth of compression from the first major surface **115** and/or to from the second compressive stress region extending to a second depth of compression from the second major surface **117.** In aspects, the second substrate **213** can be chemically strengthened to from the third compressive stress region extending to a third depth of compression from the third major surface **215** and/or to from the fourth compressive stress region extending to a fourth depth of compression from the fourth major surface **217.** In aspects, as shown in **FIG. 6****,** chemically strengthened the first substrate **113** (e.g., comprising lithium cations and/or sodium cations) can comprise contacting at least a portion of the first substrate **113** with a salt solution **603** contained in a salt bath **601.** Chemically strengthening the first substrate **113** and/or the second substrate **213** (e.g., glass-based material, ceramic-based material) by ion exchange can occur when a first cation within a depth of a surface of the first substrate **113** and/or the second substrate **213** is exchanged with a second cation within the molten salt or salt solution **603** that has a larger radius than the first cation. For example, a lithium cation within the depth of the surface of the first substrate **113** and/or the second substrate **213** can be exchanged with a sodium cation or potassium cation within a salt solution **603.** Consequently, the surface of the first substrate **113** and/or the second substrate **213** is placed in compression and thereby chemically strengthened by the ion exchange process since the lithium cation has a smaller radius than the radius of the exchanged sodium cation or potassium cation within the salt solution **603.** In aspects, the salt solution **603** can comprise potassium nitrate, potassium phosphate, potassium chloride, potassium sulfate, sodium chloride, sodium sulfate, and/or sodium nitrate, whereby lithium cations and/or sodium cations diffuse from the first substrate **113** and/or the second substrate **213** to the salt solution **603** contained in the salt bath **601.** In aspects, the temperature of the salt solution **603** can be about 300°C or more, about 360°C or more, about 400°C or more, about 500°C or less, or about 460°C or less. In aspects, the temperature of the salt solution **603** can be in a range from about 300°C to about 500°C, from about 360°C to about 460°C, from about 400°C to about 460°C, or any range or subrange therebetween. In aspects, the first substrate **113** and/or the second substrate **213** can be in contact with the salt solution **603** for about 5 minutes or more, about 15 minutes or more, about 1 hour or more, about 3 hours or more, about 48 hours or less, about 24 hours or less, or about 8 hours or less. In aspects, the first substrate **113** and/or the second substrate **213** can be in contact with the salt solution **603** for a time in a range from about 5 minutes to about 48 hours, from about 15 minutes to about 24 hours, from about 1 hour to about 8 hours, from about 15 minutes to about 24 hours, from about 1 hour to about 24 hours, from about 3 hours to about 8 hours, or any range or subrange therebetween. In aspects, at the end of step **503,** the first substrate **113** and/or the second substrate **213** can comprise one or more compressive stress regions, which can comprise a corresponding depth of compression and/or corresponding maximum compressive stress within one or more of the corresponding ranges discussed above. In aspects, at the end of step **503,** the first substrate **113** can be laminated to the second substrate **213** by the interlayer **203.**

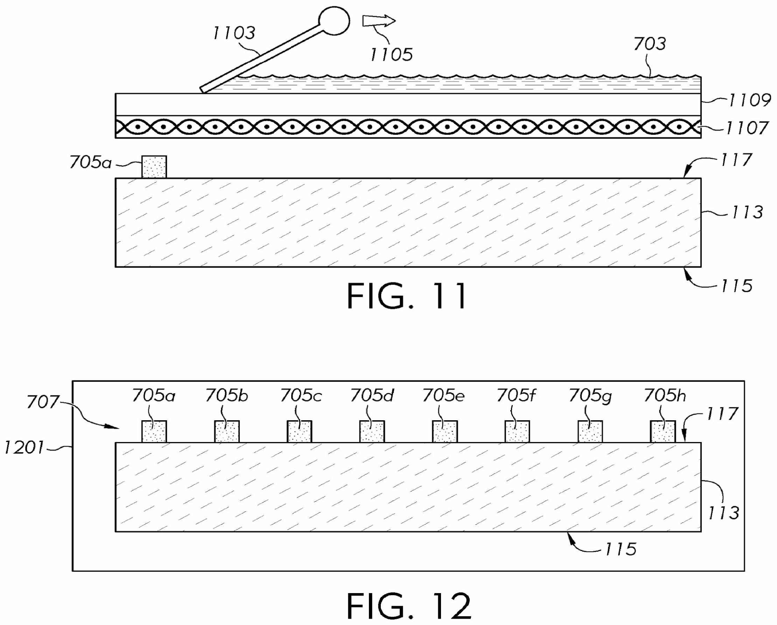

After step **501 or 503,** as shown in **FIGS. 7-11****,** methods can proceed to step **505** comprising forming the conductive ink **703,** for example, by mixing the components providing in step **501.** In further aspects, forming the conductive ink **703** can comprise adding the reactive, silane-containing binder and, optionally, the solvent to a commercially available conductive ink. In aspects, the conductive ink **703** can comprise the conductive filler, the reactive, silane-containing binder, and the solvent within one or more of the corresponding ranges discussed above with reference to the conductive ink. In aspects, the conductive filler, the reactive, silane-containing binder, and/or the solvent can comprise one or more of the corresponding materials discussed above with reference to the conductive ink. In aspects, the conductive ink can comprise a concentration of silane within one or more of the corresponding ranges discussed above. After step **501, 503, or 505,** as shown in **FIGS. 7-11****,** methods can proceed to step **507** comprising disposing the conductive ink **703** over the first substrate **113.** In aspects, as shown in **FIGS. 7-8** **and** **11,** steps can deposit one or more ink deposits **705a and/or** (see the one or more ink deposits **705a-705h** in **FIG. 12**), which can form a pattern resembling that shown in **FIGS. 3-4****.** In aspects, as shown in **FIG. 7****,** step **507** can comprise disposing the conductive ink **703** by inkjet printing. As shown in **FIG. 7****,** a nozzle **701** can dispense the conductive ink **703** to form one or more ink deposits **705a** at predefined locations on the second major surface **117** of the first substrate **113.**

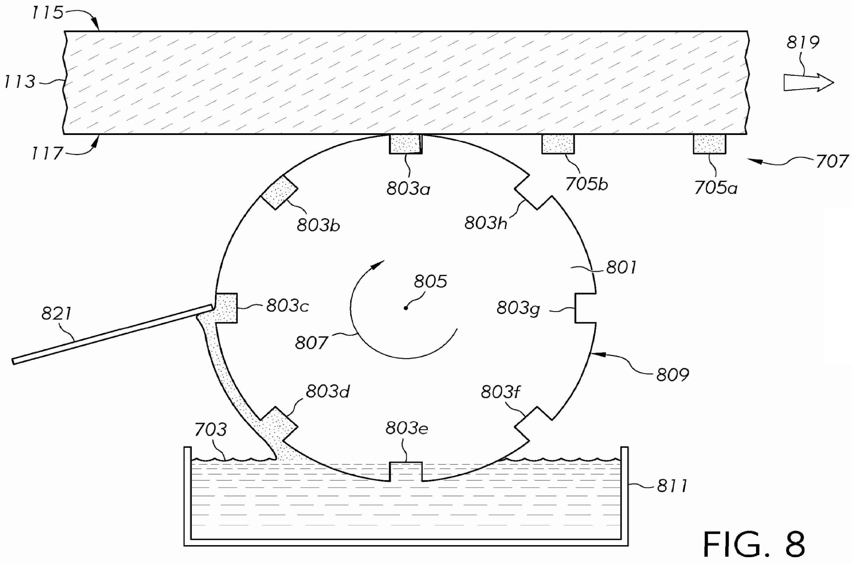

In aspects, as shown in **FIG. 8****,** step **507** can comprise a doctor blade method. As shown in **FIG. 8****,** a drum **801** can be rotated in a direction **807** about an axis **805** such that at least a peripheral surface **809** of the drum contacts the conductive ink **703,** for example, contained in an ink bath **811.** Further, as shown in **FIG. 8****,** a doctor blade **821** can apply a pressure against the peripheral surface **809** of the drum **801** to remove excess conductive ink such that an amount of conductive ink remains on the drum. In aspects, as shown, the drum **801** can comprise a pattern (e.g., plurality of recesses **803a-803h,** etched pattern, gravure) that are filled with conductive ink **703** from the bath that is not removed by the doctor blade **821** and is then deposited on the second major surface **117** of the first substrate **113** to form one or more ink deposits **705a-b.** In aspects, as shown, the first substrate **113** can travel in a direction **819,** for example, that is in the same direction as the tangential movement of the peripheral surface **809** of the drum **801** where it contacts the first substrate **113.** In further aspects, a speed that the first substrate **113** travels can be substantially equal to a tangential velocity of the peripheral surface **809** of the drum **801.** Although not shown, it is to be understood that the doctor blade method can comprise more than one drum, for example, where the first drum contacting the conductive ink in the ink bath is smooth, the doctor blade applies the pressure to the peripheral surface of the first drum, a second drum contacts the first drum to transfer the conductive ink into a pattern on the second drum, and the conductive ink is transferred from the second drum to the first substrate corresponding to the pattern.

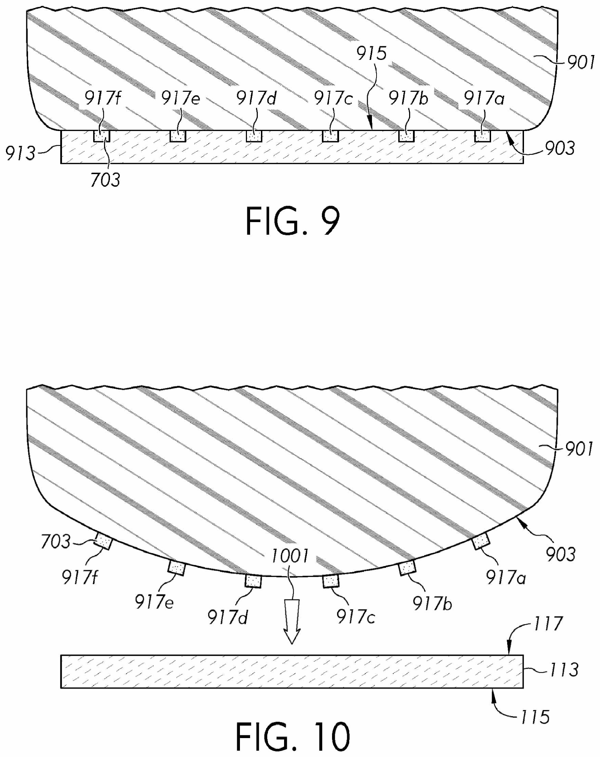

In aspects, as shown in **FIGS. 9-10****,** step **507** can comprise pad printing. As shown in **FIG. 9****,** the conductive ink **703** can be disposed within a pattern of a plate **913** (e.g., metal plate) as one or more ink portions **917a-f.** The one or more ink portions **917a-f** can be transferred to a surface **903** of a pad **901,** for example, by pressing the pad **901** against the plate **913** before lifting the pad **901** away from the plate **913.** In further aspects, the pad **901** can comprise an elastomeric material (e.g., silicone, rubber). As shown in **FIG. 10****,** the one or more ink portions **917a-f** can be transferred on the pad **901,** which can be moved in a direction **1001** such that the surface **903** of the pad **901** and the one or more ink portions **917a-f** contact the second major surface **117.** For example, pressing the pad **901** against the second major surface **117** of the first substrate **113** can transfer the one or more ink portions **917a-f** to the second major surface of the first substrate **113,** and the pad **901** can then be removed.

In aspects, as shown in **FIG. 11****,** step **507** can comprise screen printing. As shown, a stencil **1109** corresponding to an outline of the pattern to be disposed on the first substrate **113** can be disposed on a mesh screen **1107.** As shown, the conductive ink **703** can be disposed on the stencil **1109** before a squeegee **1103** is drawn across the stencil **1109** in a direction **1105.** The squeegee **1103** can force the conductive ink **703** through the stencil **1109** and mesh screen **1107** to dispose the one or more ink deposits **705a.**

After step **507,** as shown in **FIG. 12****,** methods can proceed to step **509** comprising heating the ink deposits **705a-705h** (e.g., conductive ink) at a first temperature for a first period of time to form the conductive film **103** (see **FIGS. 1-2**). In aspects, as shown in **FIG. 12****,** step **509** can comprise placing the conductive ink **703** (e.g., plurality of ink deposits **707**) in an oven **1201** maintained at the first temperature for the first period of time. In aspects, the first temperature can be about 100°C or more, about 150°C or more, about 180°C or more, about 250°C or less, about 220°C or less, or about 200°C or less. In aspects, the first temperature can be in a range from about 100°C to about 250°C, from about 150°C to about 220°C, from about 180°C to about 200°C, or any range or subrange therebetween. In aspects, the first period of time can be about 10 minutes or more, about 20 minutes or more, about 30 minutes or more, about 2 hours or less, about 1 hour or less, or about 45 minutes or less. In aspects, the first period of time can be in a range from about 10 minutes to about 2 hours, from about 20 minutes to about 1 hour, from about 30 minutes to about 45 minutes, or any range or subrange therebetween. Providing a temperature within the above-mentioned ranges can be high enough to remove the solvent from the conductive ink and to allow the reaction of the reactive, silane-containing binder while being low enough to prevent the binder from decomposing. Also, forming the coating by heating at a temperature of about 250°C or less can substantially maintain a level of compressive stress in the substrate, if present.

After step **509,** methods can proceed to step **511** comprising assembling the article **101 and/or 201.** In aspects, step **511** can comprise laminating the first substrate **113** to the second substrate **213** by the interlayer **203** to form the laminate **211.** It is to be understood that the coated article could be incorporated into any of the articles or applications discussed above. After step **509 or 511,** methods of the disclosure according to the flow chart in **FIG. 5** of making the first substrate and/or coated article can be complete at step **513.** In aspects, the conductive film of the article can comprise the conductive film thickness, pencil hardness, scratch resistance, chemical resistance, volume resistivity, sheet resistance, adhesion (as-formed), and/or temperature-cycled adhesion within one or more of the corresponding ranges discussed above.

In aspects, methods of making a coated article in accordance with aspects of the disclosure can proceed along steps **501, 503, 505, 507, 509, 511, and 513** of the flow chart in **FIG. 5** sequentially, as discussed above. In aspects, arrow **502** can be followed from step **501** to step **505,** for example, if the first substrate **113** (and/or the second substrate **213**) already comprises one or more compressive stress regions or is to be substantially unstrengthened. In aspects, arrow **504** can be followed from step **501** to step **507,** for example, if conductive ink is prepared by the end of step **501** and the first substrate **113** (and/or the second substrate **213**) already comprises one or more compressive stress regions or is to be substantially unstrengthened. In aspects, arrow **506** can be followed from step **505** to step **503,** for example, if the conductive ink is to be formed before chemically strengthening the first substrate **113** (and/or the second substrate **213**). In aspects, arrow **508** can be followed from step **503** to step **507,** for example, if the conductive ink is provided and/or formed by the end of step **503.** In aspects, arrow **510** can be followed from step **509** to step **513,** if the method is complete after the conductive film is formed by heating the conductive ink in step **509.** Any of the above options may be combined to make a coated article in accordance with aspects of the disclosure.

### EXAMPLES

Various aspects will be further clarified by the following examples. Examples A-H and AA-HH comprise a glass-based substrate comprising a lithia-free Gorilla glass with a first substrate thickness **119** of 700 µm. The glass-based substrate was chemically strengthened with a first compressive stress region comprising a maximum compressive stress of about 600 MPa. Tables 1-3 present data regarding Examples A-H. Tables 4-5 present data regarding Examples AA-HH. In Tables 3 and 5, "Yes" corresponds to the example possessing (i.e., passing) the test indicated by the corresponding column.

For Examples A-H, the conductive ink comprises the composition shown in Table 1. "3062S" corresponds to DM-SIP-3062S (Dycotec Materials), which is a silver-containing conductive ink. The "carbon black" used in Example B was product Nipex 60 available from Orion Engineered Carbons with an average particle size of 21 nm. The "silver flake" used in Example H was product FB116 obtained from Hongwu Material Technology Co. with a flake length from 1 µm to 3 µm. "Ceramer" is the product of reacting three bis[3-(trimethoxysilyl)propyl]amine with a trimer of hexamethylene-1,6-diisocyanate, as disclosed in WIPO Publication No. 2013/109674, in a concentration of 85 wt%. "PAPS" corresponds to polyaminopropylsilsesquioxane formed by polymerizing aminopropyltriethoxysilane in a concentration of 72 wt%. Example A-D comprised a concentration of mol silane per kg of conductive ink from 0.64 mol/kg (Example D) to 1.55 mol/kg (Example A), which corresponds to a minimum silane concentration in the conductive film of from 0.65 mol/kg (Example D) to 1.62 mol/kg (Example A) based solely on the amount of added solvent in the conductive ink since the amount of solvent in the conductive filler was not quantified. Examples E-H comprised a concentration of mol silane per kg of conductive ink from 0.327 mol/kg (Example G) to 0.85 mol/kg (Example E), which corresponds to a minimum silane concentration in the conductive film of from 0.33 mol/kg (Example G) to 0.88 mol/kg (Example E) based solely on the amount of added solvent in the conductive ink since the amount of solvent in the conductive filler was not quantified.

The conductive film Examples A-H were screen printed and were heated at 200°C for 30 minutes to form the conductive film. Tables 2-3 present properties of conductive films for Examples A-H. Examples A-H comprises a thickness from 9 µm to 23 µm. The volume resistivity of Examples B-H are from 3.4 x 10⁻⁵ Ω-cm to 3.4 x 10⁻⁴ Ω-cm. Example A comprises a volume resistivity of greater than 0.1 Q-cm. Comparing Examples A and C-D, decreasing the amount of the silane-containing binder increasing the volume resistivity of the conductive film. Examples B-E and G-H comprise a sheet resistance from 0.014 Ω/sq/mil to 0.268 Ω/sq/mil. Examples A-H comprise a pencil hardness of 9H or more while Examples A-G comprise a pencil hardness greater than 9H. Examples A-H comprise a scratch resistance from 4 N to 10 N (i.e., about 4 N or more, with Examples A-C and E-F comprising a scratch resistance of 5 N or more.

As shown in Table 3, Examples A-H comprise an as-formed adhesion of 5 (out of 5) according to ASTM D3359-17 Method A using Tesa 4657 tape. Examples B-D and F-H passes the temperature-cycled adhesion test, as described above. Examples A and E were not tested for temperature cycled adhesion. Examples A-H are resistant to removal by ethanol.

**Table 1: Conductive Ink Composition of Examples A-H**

| Example | Conductive Filler | Added Silane-containing Binder | Added Solvent | Filler (wt%) | Added Binder (wt%) | Added Solvent (wt%) | Silane Concentration in Ink (mol/kg) |
|---|---|---|---|---|---|---|---|
| A | 3062S | Ceramer | -- | 70 | 25.5 | 4.5 | 1.55 |
| B | 3062S + Carbon black | Ceramer | -- | 70 (ink) +12 (C) | 15.3 | 2.7 | 0.93 |
| C | 3062S | Ceramer | -- | 85 | 12.75 | 2.25 | 0.77 |
| D | 3062S | Ceramer | -- | 90 | 8.5 | 1.5 | 0.64 |
| E | 3062S | PAPS | -- | 87 | 9.36 | 3.64 | 0.85 |
| F | 3062S | PAPS | -- | 89 | 7.92 | 3.08 | 0.72 |
| G | 3062S | PAPS | -- | 95 | 3.6 | 1.4 | 0.327 |
| H | Silver flake | PAPS | Terpineol | 82.6 | 6.55 | 12.55 | 0.595 |

**Table 2: Properties of Conductive Films for Examples A-H**

| Example | Thickness (µm) | Volume Resistivity (Ω-cm) | Sheet Resistance (Ω/sq/mil) | Silane Concentration in Film (min mol/kg) |
|---|---|---|---|---|
| A | 12 | > 0.1 | -- | 1.62 |
| B | 14 | 3.4 x 10⁻⁴ | 0.13 | 0.95 |
| C | 11 | 7.2 x 10⁻⁴ | 0.29 | 0.79 |
| D | 11 | 1.1 x 10⁻⁴ | 0.047 | 0.64 |
| E | 9 | 7.0 x 10⁻⁴ | 0.268 | 0.88 |
| F | 9 | 2.0 x 10⁻⁴ | -- | 0.74 |
| G | 10 | 6.3 x 10⁻⁵ | 0.026 | 0.33 |
| H | 23 | 3.4 x 10⁻⁵ | 0.014 | 0.68 |

**Table 3: Properties of Conductive Films for Examples A-H (cont.)**

| Example | Pencil Hardness | Scratch Resistance (N) | Adhesion (as-formed) | Temperature-cycled Adhesion | Chemical Resistance (Ethanol) |
|---|---|---|---|---|---|
| A | > 9H | 10 | 5 | -- | Yes |
| B | > 9H | 5 | 5 | Yes | Yes |
| C | > 9H | 5 | 5 | Yes | Yes |
| D | > 9H | 4 | 5 | Yes | Yes |
| E | > 9H | 5 | 5 | -- | Yes |
| F | > 9H | 5 | 5 | Yes | Yes |
| G | > 9H | 4 | 5 | Yes | Yes |
| H | 9H | 4 | 5 | Yes | Yes |

For Examples AA-HH, the conductive ink comprises one or more commercially available ink as shown in Table 4. No solvent and no silane-containing binder was added to Examples AA-HH. "021LV" corresponds to Metalon HPS-021LV (Novacentrix). "030LV" corresponds to Metalon HPS-030LV (Novacentrix). "3062S" corresponds to DM-SIP-3062S (Dycotec Materials). "3102S" corresponds to DM-SIP-3102S (Dycotec Materials). "4311S" corresponds to DM-CAP-4311S (Dycotec Materials). "4321S" corresponds to DM-CAP-4321S (Dycotec Materials). "021LV," "030LV," "3062S," and "3102S" contain silver. "4311S" and "4321S" contain carbon. Examples AA-HH were screen printed and heated at 200°C for the heating time presented in Table 4.

The properties of the conductive films of Examples AA-HH are presented in Tables 4-5. Examples AA-HH comprise a thickness from 5 µm to 12 µm. The volume resistivity of Examples AA-HH is from 5.0 x 10⁻⁶ Ω-cm to 8.2 x 10⁻² Q-cm. The sheet resistance of Examples AA-HH is from 0.003 Ω/sq/mil to 50 Q/sq/mil. Examples AA-HH comprise a pencil hardness from 3H to 7H. None of Examples AA-HH have a pencil hardness of 8H or more. Examples AA-HH comprise a scratch resistance of 4 or less. Examples AA-DD and HH exhibited a scratch resistance less than 2 N. Examples AA-DD comprise an as-formed adhesion of 5, but Examples EE-HH left a residue on the tape used for the adhesion test. The residue corresponds to a lack of cohesion within the conductive film of Examples EE-HH. Examples BB-DD were tested using the temperature-cycled adhesion test discussed above, and all of Examples BB-DD failed the temperature-cycled adhesion test. Examples AA-HH were not resistant to removal by ethanol.

**Table 4: Composition and Properties of Examples AA-HH**

| Example | Conductive Ink | Heating Time (min) | Thickness (µm) | Volume Resistivity (Ω-cm) | Sheet Resistance (Ω/sq/mil) |
|---|---|---|---|---|---|
| AA | 021LV | 15 | 6 | 8.0 x 10⁻⁶ | 0.003 |
| BB | 030LV | 15 | 6 | 5.0 x 10⁻⁶ | 0.003 |
| CC | 3062S | 30 | 5 | 1.6 x 10⁻⁵ | 0.006 |
| DD | 3102S | 30 | 5 | 1.8 x 10⁻⁵ | 0.0065 |
| EE | 4311S | 30 | 12 | 7.2 x 10⁻² | 20 |
| FF | 4321S | 30 | 9 | 8.2 x 10⁻² | 50 |
| GG | 40% 4321S + 60% 3062S | 40 | 7.5 | 1.2 x 10⁻⁴ | 5 |
| HH | 31.6% 4321S + 68.4% 3062S | 40 | 6 | 8.2 x 10⁻⁵ | 0.034 |

**Table 5: Properties of Examples AA-HH**

| Example | Pencil Hardness | Scratch Resistance (N) | Adhesion (as-formed) | Temperature -cycled Adhesion | Chemical Resistance (Ethanol) |
|---|---|---|---|---|---|
| AA | 5H | <2 | 5 | -- | No |
| BB | 3H | <2 | 5 | No | No |
| CC | 5H | <2 | 5 | No | No |
| DD | 6H | <2 | 5 | No | No |
| EE | 4H | 3 | Residue | -- | No |
| FF | 7H | 4 | Residue | -- | No |
| GG | 5H | < 3 | Residue | -- | No |
| HH | 5H | <2 | Residue | -- | No |

Comparing Examples A-H with Examples AA-HH, Examples A-H comprise a higher pencil hardness than any of Examples AA-HH. Examples A-H comprise greater scratch resistance than Examples AA-EE and GG-HH, and Examples A-C and E-F comprise a greater scratch resistance than Examples AA-HH. Examples BB-DD failed the temperature-cycled adhesion test while all of Examples A-H tested (Examples B-D and F-H) passed the temperature-cycled adhesion test. All of Examples AA-HH were not resistant to removal with ethanol while all of Examples A-H were resistant to removal with ethanol.

The above observations can be combined to provide articles comprising a conductive film with a volume resistivity in a range from about 0.01 Ohm-centimeters to about 10⁻⁵ Ohm-centimeters, a pencil hardness of about 8H or more, and a scratch resistance of about 3 Newtons or more. The articles can comprise a substrate comprising a glass-based material and/or a ceramic-based material, which can provide good dimensional stability, good impact resistance, and/or good puncture resistance. The substrate comprising a glass-based material and/or a ceramic-based material can comprise one or more compressive stress regions, which can further provide increased impact resistance and/or increased puncture resistance.

The conductive film can comprise a conductive filler and a silane-containing binder. Providing the conductive filler in the conductive ink can enable the conductive film formed from the conductive ink to be electrically conductive. Providing at least 50 wt% of the conductive filler can enable conductivity, for example, enabling the filler to form paths through the resulting conductive ink. Providing less than 93 wt% of the conductive filler can enable good adhesion, scratch resistance, chemical resistance, and/or pencil hardness of the resulting conductive film. Providing the silane-containing binder can bond to the substrate, which can increase adhesion, scratch resistance, and/or chemical resistance of the conductive film. Moreover, providing a high concentration of silane (e.g., about 0.3 mol silane per kg conductive film) can further increase adhesion, scratch resistance, and/or chemical resistance of the conductive film. Providing the silane-containing binder containing nitrogen (e.g., amine, urea, allophanate) and/or sulfur (e.g., thiol) can further improve adhesion of the conductive film. A conductivity of the conductive film can be adjusted by changing a ratio of the conductive filler to the silane-containing binder.

Aspects of the disclosure comprise conductive inks, which can be used to make conductive films. The conductive inks can comprise the conductive filler, a reactive, silane-containing binder, and a solvent. Providing about 4 wt% or more of the reactive, silane-containing binder can provide good adhesion, scratch resistance, chemical resistance, and/or pencil hardness to the resulting conductive film. Providing less than 30 wt% of the reactive, silane-containing binder can enable the resulting conductive film to be conductive, for example, by allowing the conductive filler to form paths through the conductive ink. Providing a concentration of 0.3 mol/kg or more of silane in the conductive ink can increase an adhesion of the resulting conductive film, increase a chemical resistance of the resulting conductive film, and/or increasing a hardness of the resulting conductive film. Providing the reactive, silane-containing binder comprising nitrogen (e.g., amine, urea, allophanate) and/or sulfur (e.g.,) can improve stability (e.g., shelf stability) of the conductive ink and/or improve adhesion of the resulting conductive film. Providing a solvent of about 3 wt% or more can be used to adjust a viscosity of the conductive ink to be suitable for a desired application method (discussed below). Providing a solvent comprising an alcohol can improve a stability (e.g., shelf life) of the conductive ink, for example, by decreasing settling of the conductive filler and/or hydrogen bonding with the reactive, silane-containing binder. Providing about 25 wt% or less solvent can enable the conductive ink to form a conductive film comprising sufficient thickness (e.g., about 5 µm or more).

Methods of making articles can comprise disposing the conductive ink on the substrate and then heating the conductive ink to form the conductive film. Forming the coating by heating at a temperature of about 100°C or more can be high enough to remove the solvent from the conductive ink and to allow the reaction of the reactive, silane-containing binder. Forming the coating by heating at a temperature of about 250°C or less can prevent the binder from decomposing. Forming the coating by heating at a temperature of about 250°C or less can substantially maintain a level of compressive stress in the substrate, if present.

Directional terms as used herein-for example, up, down, right, left, front, back, top, bottom-are made only with reference to the figures as drawn and are not intended to imply absolute orientation.

It will be appreciated that the various disclosed aspects may involve features, elements, or steps that are described in connection with that aspect. It will also be appreciated that a feature, element, or step, although described in relation to one aspects, may be interchanged or combined with alternate aspects in various non-illustrated combinations or permutations.

It is also to be understood that, as used herein the terms "the," "a," or "an," mean "at least one," and should not be limited to "only one" unless explicitly indicated to the contrary. For example, reference to "a component" comprises aspects having two or more such components unless the context clearly indicates otherwise. Likewise, a "plurality" is intended to denote "more than one."

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. Ranges can be expressed herein as from "about" one particular value, and/or to "about" another particular value. When such a range is expressed, aspects include from the one particular value and/or to the other particular value. Similarly, when values are expressed as approximations, by use of the antecedent "about," it will be understood that the particular value forms another aspect. Whether or not a numerical value or endpoint of a range in the specification recites "about," the numerical value or endpoint of a range is intended to include two aspects: one modified by "about," and one not modified by "about." It will be further understood that the endpoints of each of the ranges are significant both in relation to the other endpoint and independently of the other endpoint.

The terms "substantial," "substantially," and variations thereof as used herein are intended to note that a described feature is equal or approximately equal to a value or description. For example, a "substantially planar" surface is intended to denote a surface that is planar or approximately planar. Moreover, as defined above, "substantially similar" is intended to denote that two values are equal or approximately equal. In aspects, "substantially similar" may denote values within about 10% of each other, for example, within about 5% of each other, or within about 2% of each other.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

While various features, elements, or steps of particular aspects may be disclosed using the transitional phrase "comprising," it is to be understood that alternative aspects, including those that may be described using the transitional phrases "consisting of" or "consisting essentially of," are implied. Thus, for example, implied alternative aspects to an apparatus that comprises A+B+C include aspects where an apparatus consists of A+B+C and aspects where an apparatus consists essentially of A+B+C. As used herein, the terms "comprising" and "including", and variations thereof shall be construed as synonymous and open-ended unless otherwise indicated.

The above aspects, and the features of those aspects, are exemplary and can be provided alone or in any combination with any one or more features of other aspects provided herein without departing from the scope of the disclosure.

It will be apparent to those skilled in the art that various modifications and variations can be made to the present disclosure without departing from the spirit and scope of the disclosure. Thus, it is intended that the present disclosure cover the modifications and variations of the aspects herein provided they come within the scope of the appended claims and their equivalents.

The application refers to the following aspects:
An article comprising:
   a substrate; and
   a conductive film disposed on a surface of the substrate,
   wherein the conductive film comprises:
      a volume resistivity in a range from about 0.01 Ohm-centimeters to about 10⁻⁵ Ohm-centimeters,
      a pencil hardness of about 8H or more; and
      a scratch resistance of about 3 Newtons or more.
2. The article of aspect 1, wherein the conductive film comprises a conductive filler and a silane-containing binder, the silane-containing binder is bonded to the surface of the substrate.
3. The article of aspect 2, wherein the conductive film comprises about 50 wt% or more of the conductive filler.
4. The article of any one of aspects 2-3, wherein the conductive filler comprises one or more of silver, copper, nickel, or gold.
5. The article of aspect 4, wherein the conductive filler comprises silver and the the silver comprises silver flake.
6. The article of any one of aspects 2-5, wherein the conductive film comprises about 30 wt% or less of the silane-containing binder.
7. The article of any one of aspects 2-6, wherein the silane-containing binder contains multiple silane functionalities.
8. The article of any one of aspects 2-7, wherein the silane-containing binder comprises nitrogen.
9. The article of any one of aspects 2-8, wherein the silane-containing binder comprises polyaminopropylsilsesquioxane.
10. The article of any one of aspects 2-9, wherein the silane-containing binder comprises one or more of a silane-functionalized biuret, a silane-functionalized isocyanate, a urea-containing silane-functionalized binder, or a silane-containing allophanate.
11. The article of any one of aspects 1-10, wherein the conductive film comprises about 0.3 mol silane per kg of the conductive film or more.
12. The article of any one of aspects 1-11, wherein the conductive film as-formed comprises an adhesion of 5 according to ASTM D3359-17 Method A using Tesa 4657 tape.
13. The article of any one of aspects 1-11, wherein, after being subjected to 50 cycles between -30°C and 80°C, the conductive film comprises an adhesion of 4 or more according to ASTM D3359-17 using Tesa 4657 tape, each cycle comprising 1 hour to heat to 80°C, 4 hours at 80°C, 2 hours to cool to -30°C, and then 4 hours at -30°C.
14. The article of any one of aspects 1-13, wherein the conductive film comprises an average thickness in a range from about 5 micrometers to about 50 micrometers.
15. The article of any one of aspects 1-14, wherein the conductive film comprises a sheet resistance from about 0.01 Ohms/square/mil to about 4 Ohms/square/mil.
16. A conductive ink comprising:
   a conductive filler;
   a reactive, silane-containing binder; and
   a solvent.
17. The conductive ink of aspect 16, wherein the conductive ink comprises about 50 wt% or more of the conductive filler.
18. The method of any one of aspects 16-17, wherein the conductive filler comprises one or more of silver, copper, nickel, or gold.
19. The article of aspect 18, wherein the conductive filler comprises silver and the silver comprises silver flake.
20. The conductive ink of any one of aspects 16-19, wherein the conductive ink comprises about 30 wt% or less of the silane-containing binder.
21. The conductive ink of any one of aspects 16-20, wherein the reactive, silane-containing binder comprises an alkoxysilane or silanol functional group.
22. The conductive ink of any one of aspects 16-21, wherein the reactive, silane-containing binder contains multiple silane functionalities.
23. The conductive ink of any one of aspects 16-22, wherein the conductive ink comprises about 0.3 mol silane per kg of the conductive ink or more.
24. The conductive ink of any one of aspects 16-23, wherein the reactive, silane-containing binder comprises nitrogen and an amine functional group.
25. The conductive ink of aspect 16-24, wherein the reactive, silane-containing binder comprises polyaminopropylsilsesquioxane.
26. The conductive ink of any one of aspects 16-25, wherein the reactive, silane-containing binder comprises one or more of a silane-functionalized biuret-containing binder, a silane-functionalized isocyanate-containing binder, a silane-functionalized urea-containing binder, or a silane-containing allophanate-containing binder.
27. The conductive ink of any one of aspects 16-26, wherein the conductive ink is free of a photo-initiator.
28. A method of forming an article comprising:
   disposing a conductive ink on a surface of a substrate; and
   heating the conductive ink at a first temperature from about 100°C to about 250°C for a first period of time to form a conductive film,
   wherein the conductive film comprises:
      a volume resistivity in a range from about 0.01 Ohm-centimeters to about 10⁻⁵ Ohm-centimeters,
      a pencil hardness of about 8H or more; and
      a scratch resistance of about 3 Newtons or more.
29. The method of aspect 28, wherein the first period of time is in a range from about 10 minutes to about 2 hours.
30. The method of any one of aspects 28-29, wherein the disposing the conductive ink comprises one of screen printing, inkjet printing, a doctor blade method, and pad printing.
31. The method of any one of aspects 28-30, wherein, the substrate comprises a glass or glass ceramic material, wherein, before the disposing the conductive ink, the method comprises chemically strengthening the substrate.
32. The method of aspect 31, further comprising, wherein the chemically strengthening forms a compressive stress region extending to a first depth of compression from the surface, the compressive stress region comprising a maximum compressive stress of about 250 MegaPascals or more.

## Claims

1. A conductive ink comprising:
a conductive filler;
a reactive, silane-containing binder; and
a solvent.

2. The conductive ink of claim 1, wherein the conductive ink comprises about 50 wt% or more of the conductive filler.

3. The method of any one of claims 1-2, wherein the conductive filler comprises one or more of silver, copper, nickel, or gold.

4. The article of claim 3, wherein the conductive filler comprises silver and the silver comprises silver flake.

5. The conductive ink of any one of claims 1-4, wherein the conductive ink comprises about 30 wt% or less of the silane-containing binder.

6. The conductive ink of any one of claims 1-5, wherein the reactive, silane-containing binder comprises an alkoxysilane or silanol functional group.

7. The conductive ink of any one of claims 1-6, wherein the reactive, silane-containing binder contains multiple silane functionalities.

8. The conductive ink of any one of claims 1-7, wherein the conductive ink comprises about 0.3 mol silane per kg of the conductive ink or more.

9. The conductive ink of any one of claims 1-8, wherein the reactive, silane-containing binder comprises nitrogen and an amine functional group.

10. The conductive ink of claim 1-9, wherein the reactive, silane-containing binder comprises polyaminopropylsilsesquioxane.

11. The conductive ink of any one of claims 1-10, wherein the reactive, silane-containing binder comprises one or more of a silane-functionalized biuret-containing binder, a silane-functionalized isocyanate-containing binder, a silane-functionalized urea-containing binder, or a silane-containing allophanate-containing binder.

12. The conductive ink of any one of claims 1-11, wherein the conductive ink is free of a photo-initiator.
